# EUROPÄISCHE PATENTSCHRIFT

(11) **EP 4 384 762 B1**
(45) Veröffentlichungstag und Bekanntmachung des Hinweises auf die Patenterteilung: **09.04.2025**
(21) Anmeldenummer: 22764422.6
(22) Anmeldetag: 11.08.2022
(51) Int. Cl.: F26B 21/08, F26B 21/10, F26B 21/12, F26B 25/22, C12C 1/073, F26B 9/06

(54) **VERFAHREN ZUM ENERGIEEFFIZIENTEN TROCKNEN VON GEKEIMTEN SAATEN UND VORRICHTUNG ZUR DURCHFÜHRUNG DES VERFAHRENS**
METHOD FOR THE ENERGY-EFFICIENT DRYING OF GERMINATED SEEDS AND APPARATUS FOR CARRYING OUT THE METHOD
PROCÉDÉ DE SÉCHAGE ÉCONOMIQUE EN ÉNERGIE DE GRAINES GERMÉES ET DISPOSITIF DESTINÉ À LA MISE EN UVRE DU PROCÉDÉ

(30) Priorität: 11.08.2021 EP 21190835
(43) Veröffentlichungstag der Anmeldung: 19.06.2024
(73) Patentinhaber: Bühler GmbH, 92339 Beilngries (DE)
(72) Erfinder: LEFEBVRE, Clêment, 1020 Renens (CH); RITTENAUER, Michael, 1012 Lausanne (CH); TORRENTÓ, Albert Garcia, 8400 Winterthur (CH)
(74) Vertreter: Leimgruber, Fabian Alfred Rupert
(86) Internationale Anmeldenummer: PCT/EP2022/072587
(87) Internationale Veröffentlichungsnummer: WO 2023/017130

(56) Entgegenhaltungen:
- EP-A2- 0 097 965
- EP-A2- 2 775 239
- DE-C1- 3 407 685
- GB-A- 2 258 468
- GB-A- 2 287 527
- US-A1- 2015 354 895
- US-A1- 2020 263 923

## Beschreibung

### Technisches Gebiet

Die Erfindung bezieht sich auf das Gebiet der industriellen Malzherstellung auch Mälzen genannt und industrielle Anlagen zur industriellen Herstellung von Malz aus Getreide oder ganz allgemein von industriellen Darren zur Trocknung von Trocknungsgut (Darrgut). Insbesondere bezieht sich die Erfindung auf ein Verfahren zum Trocknen von Grünmalz in einer industriellen Darre mit Hilfe eines oder mehreren drehzahlmodulierten Ventilator(en), wobei mittels des Ventilators eine Luftmassenstroms durch ein Trocknungsgutbett des Grünmalzes bereitgestellt wird. Als Darre werden Einrichtung zum Dörren und/oder Trocknen von Lebensmitteln und Gebrauchsgütern mit Hilfe von Hitze bezeichnet. Darren werden normalerweise nach dem zu trocknenden Gut unterteilt, wie z.B. Getreidedarren, Malzdarren, Hopfendarren aber auch andere Darren wie Darren für Dörrobst, Tabak, Garnelen, Holztrocknung, Samendarren oder auch Leinen/Flachsdarren zur Faserproduktion (Kleidung, Seilerei). Die vorliegende Erfindung bezieht sich ganz allgemein auf energie-optimierte Darren und Prozesse von Darren in den unterschiedlichsten obgenannten Anwendungsbereichen. Im Speziellen bezieht sich die Erfindung aber auf energieeffiziente Malzdarren zum Darren von Grünmalz, bei welchem das Grünmalz auf einem ruhenden oder bewegten Hordenboden zu einer Schicht vorgegebener Höhe aufgeschichtet wird, die mit einem Luftstrom, insbesondere Warmluftstrom, durchströmt wird, bis die Schicht oder eine an den Hordenboden grenzende Teilschicht einen vorbestimmten Trocknungsgrad erreicht hat, worauf diese Schicht/Teilschicht vom Hordenboden abgefördert wird. Im Falle einer Teilschicht, wird die übrige Teilschicht z.B. durch Umleiten auf dem Hordenboden gehalten und mit dem Luftstrom weiter beaufschlagt. Der Luftstrom wird durch einen entsprechend angebrachten Ventilator erzeugt.

### Hintergrund der Erfindung

Darren sind seit langem bekannte Vorrichtungen zum Dörren und/oder Trocknen von Lebensmitteln und anderen Gütern, wie z.B. Leinen oder Flachs, mit Hilfe von Wärme bzw. Hitze. Typischerweise bestehen Darren aus einem örtlich eingegrenzten Bereich (Darrraum), der einen guten Luftdurchzug gestattet. Für bestimmte Anwendungsbereiche umfasst die Darre ein Holz- oder Drahtgitter mit Beheizungsmöglichkeit zum Trocknen oder Rösten von Obst, Sämereien, Getreide, Hopfen u.a. Je nach Anwendungsgebiet unterscheidet sich jedoch die Konstruktion der Darre. Darren werden deshalb typischerweise nach dem zu trocknenden Gut unterteilt, wie z.B. Getreidedarren, Malzdarren, Hopfendarren aber auch Darren für Dörrobst, Tabak, Garnelen, zur Holztrocknung, Samendarren oder auch Leinen/Flachsdarren zur Faserproduktion (Kleidung, Seilerei). So dient z.B. die Malzdarre der Malzherstellung. Bei der Malzherstellung wird das Grünmalz als dritter Verarbeitungsschritt nach dem Weichen und Keimen auf der Darre getrocknet, das heisst gedarrt. Durch die Hitze und den damit verbundenen Entzug der Feuchtigkeit wird Malz nicht nur lagerfähig, sondern erhält auch sein typisches (malziges) Aroma. Die Malzdarre besteht aus einem engmaschigen Drahtgeflecht oder einem geschlitzten Blech, der sogenannten Horde, auf der das Grünmalz aufgeschichtet wird. Von unten durchströmt heisse Luft das Trocknungsgut und entzieht ihm so die Feuchtigkeit. Die Erhitzung der Luft erfolgt in modernen Mälzereien typischerweise indirekt, indem z.B. durch Öl- oder Gasbrenner direkt erwärmte Luft die Wärmeenergie über einen Wärmetauscher an die das Grünmalz durchströmende Luft abgibt. Durch die indirekte Befeuerung bleibt das Malz frei von den Schadstoffen und Fehlaromen fossiler Brennstoffe und die Bildung von Nitrosaminen wird minimiert. Die direkte Befeuerung wird typischerweise z.B. zur Erzeugung von aromatischen Spezialmalzen eingesetzt. So wird Rauchmalz, das für Rauchbier verwendet wird, durch ein Buchenholz-, seltener auch ein Eichenholzfeuer unter der Darre erzeugt. Für die Herstellung von Whiskymalz wird Torf unter der Darre verfeuert, was dem Malz und dem daraus hergestellten Whisky eine phenolige Note verleiht. Neuerdings werden auch zunehmend Biere mit Whiskymalz hergestellt. Ein anderes Beispiel ist die Hopfendarre. Hopfen hat bei der Ernte einen Wassergehalt von 75-84% und muss zur Erhaltung der Lagerfähigkeit direkt nach der Ernte auf einen Feuchtegrad von 9-10% getrocknet werden. Die Trocknungszeit dauert je nach Sorte und Dimensionierung der Darre ca. 3-5 Stunden. Für ein optimales Trocknungsergebnis wird auf der Hopfendarre eine Trocknungstemperatur von 62-68°C bei einer Schütthöhe von 20-35cm und einer Luftgeschwindigkeit von 0,30-0,45m/s angestrebt. Bei einem weiteren Beispiel, der Getreidedarre, dient das Darren ebenfalls überwiegend der Haltbarmachung. Da Getreide erst unter 14% Feuchte sicher lagerfähig ist, je nach Witterung aber auch mit einer höheren Feuchte gedroschen wird, muss die Feuchte durch Trocknen entzogen werden. Würde die Lagerung zu feucht erfolgen, wäre der Befall mit Pilzen und Schädlingen die Folge. Auch kann durch Feuchtigkeit im Getreide eine Selbstentzündung erfolgen. Bei der späteren Vermahlung des Getreides kann es jedoch notwendig werden, dieses in Abhängigkeit von der Glasigkeit des Korns wieder auf 16-17% Feuchte aufzunetzen, d.h. anzufeuchten, da die trockene Schale bei der Vermahlung zu sehr splittern und eine Trennung zwischen Kleie und Mehl erschweren würde. Ein anderer erwünschter Effekt des Getreidedarrens kann die Erzeugung von Röstaroma beim Rösten des Getreides sein. Ein bekanntes Produkt, welches durch die Darre sein typisches Aroma erhält, ist Grünkern, das Korn des Dinkels, das halbreif geerntet und unmittelbar darauf künstlich getrocknet wird. Wie oben diskutiert hat das Darren deshalb eine grosse Bedeutung in der industriellen Herstellung von Nahrungsmitteln, aber auch bei anderen industriellen Gütern, die einen Trocknungs- oder Dörrprozess benötigen.

Bei der Malzzubereitung umfasst der Prozess insbesondere folgende drei Vorgängen, namentlich (i) das Weichen, welches für den Beginn der Keimung das Ausbringen und Weichen in Weichbehältern, Zugabe von Saaten und Wasser und anschliessendem Transport des nassen Keimgutes in Keimkästen, (ii) das Keimen des Korns (Auflaufen der Saat), und (iii) das Darren, d.h. der Beendigung der Keimung durch Wasserentzug als künstlicher Eingriff in den Keimvorgang. Der letzte Schritt erfolgt mittels Malzdarren. Bei Malzdarren zum Darren von Grünmalz, wird das Grünmalz im Darrraum auf einem ruhenden oder bewegten Hordenboden zu einer Schicht vorgegebener Höhe aufgeschichtet, die von einem Luftstrom, insbesondere Warmluftstrom, durchströmt wird, bis die Schicht oder eine an den Hordenboden grenzende Teilschicht einen vorbestimmten Trocknungsgrad erreicht hat, worauf diese Schicht/Teilschicht vom Hordenboden abgefördert wird. Im Falle einer Teilschicht, wird die übrige Teilschicht z.B. durch Umleiten auf dem Hordenboden gehalten und mit dem Luftstrom weiter beaufschlagt. Der Luftstrom wird typischerweise durch einen entsprechend angebrachten Ventilator, den Darrenventilator erzeugt. Der Hordenboden ist luft- bzw. gasdurchlässig bestehend z.B. aus einem engmaschigen Drahtgeflecht oder einem geschlitzten Blech. Die im Stand der Technik bekannten Darrverfahren für die Malzbereitung laufen z.B. chargenweise ab, indem nacheinander Charge auf Charge auf dem Hordenboden im Darraum behandelt werden. Jede Charge wird dabei in Form einer Grünmalzschicht typischerweise gleichmässig auf den Hordenboden aufgebracht und dort bis auf einen vorgegebenen Trocknungsgrad gedarrt. Das fertige Darrmalz wird dann gekühlt und anschliessend vom Hordenboden geräumt und abtransportiert. Üblicherweise geht man von einer mittleren Sollfeuchtigkeit der Malzkörner des fertigen Darrmalzes von 4 bis 5% aus. Andere Sollfeuchtigkeiten können natürlich auch definiert werden.

Die Verwendung von drehzahlmodulierten Ventilatoren zum Erzeugen eines Luftmassenstroms durch das Trocknungsgutbett des Grünmalzes auf den Hordenboden von Darren, insbesondere Malzdarren, ist bekannt. Dabei wird ein erwärmter Luftmassenstrom mittels eines Ventilators durch das Trocknungsbett geleitet, womit dem Trocknungsgut Feuchtigkeit entzogen wird. Abströmseitig ist der Luftmassenstrom in einer ersten Phase typischerweise mit annähernd 100% Feuchte gesättigt, bis das Trocknungsgut einen Trocknungsgutfeuchtigkeitsgehalt von etwa 20% oder weniger erreicht hat, anschliessend folgt eine weitere Trocknungsphase, bis eine vorbestimmten Restfeuchte des Trocknungsguts erreicht wird. Für die Ventilatoren ist, je nach Konstruktion der Darre, die Verwendung von Ventilatoren unterschiedlicher Bauart bekannt Als Ventilatoren bezeichnet man Strömungsvorrichtungen, um Luft zu befördern und Drücke aufzubauen. Typischerweise werden Axialventilatoren für niedrige und mittlere Drücke verwendet, während Radialventilatoren zur Erzeugung von höhere Drücke eingesetzt werden. Axialventilatoren zur Erzeugung hoher Fördervolumen und niedriger Drücke zeichnen sich typischerweise durch lange Flügel und kleine Nabendurchmesser aus. Sollen mit Axialventilatoren höhere Drücke aufgebaut werden, sind Laufräder mit grösseren Nabendurchmessern erforderlich. Die Antriebsmotoren können entweder in die Laufradnabe integriert (Aussenläufermotor) sein, oder es können Motoren z.B. mit angeflanschtem Flügel verwendet werden. Radialventilatoren sind z.B. als Gehäuseventilatoren oder als frei laufende Räder bekannt. Grundsätzlich kann zwischen Laufrädern mit vorwärts gekrümmten Schaufeln für hohe Fördervolumen bei mittleren Drücken und niedrigen Schallpegeln, und Laufrädern mit rückwärts gekrümmten Schaufeln für hohe Drücke in speziellen Anlagen unterschieden werden. Der Antrieb der Laufräder kann z.B. direkt oder mit Keilriemen erfolgen. Typische Parameter für die Auswahl eines Ventilators sind der zu erreichende Volumenstrom (m³/h), die statische Druckerhöhung (Ps in Pa), der Schall (db (A)) und/oder die Temperatur. Um einen Volumenstrom bereit zu stellen und Druck aufzubauen, treten im Ventilator mechanische, elektrische und strömungsbedingte Verluste auf, die zu einer entsprechenden Energieeffizienz eines Ventilators beitragen.

Das Grünmalz besteht aus gekeimtem Korn von Saaten, wie Getreide, Pseudo-Getreide, Leguminosen u.ä., insbesondere beispielsweise Gerste, Roggen oder Weizen, welches durch Weichen und Keimen z.B. in einem geschlossenen Bereich erhalten wird. Generell betrifft das Verfahren gekeimtes Korn, welches aus keimfähigem, bio-aktivem Korn durch Weichen und Keimen erhalten wird, wobei das Weichen auch mehrfach durchgeführt werden kann. Bei den Mälzverfahren wird beim Weichen und Keimen in einer entsprechenden Produktionszeit typischerweise möglichst gute Malzqualitäten bei möglichst hoher Gewichtsausbeute angestrebt. Das Grünmalz wird dann in den herkömmlichen, industriellen Mälzanlagen auf Hordendarren von einem Trocknungsgutfeuchtigkeitsgehalt von rund 38-46% auf eine gewünschte Endgutfeuchte von rund 3%-6% getrocknet bzw. gedarrt wird, womit der Keimvorgang beendet wird. Absicht dieses Abtrocknens ist es vor allem, das Malz lagerfest zu machen und durch den Wasserentzug verschiedene stoffliche Veränderungen im Malz zu bewirken. Zu diesem Zweck wird erwärmtes Trocknungsgas mittels Ventilation durch das Grünmalz geleitet, das auf einer oder mehreren Horden übereinander geschichtet sein kann. Üblich ist dabei, als Trocknungsgas Umgebungsluft zu verwenden, die über ein vorgeschaltetes Heizsystem erwärmt wird. Eine andere bekannte Möglichkeit besteht darin, mit Umgebungsluft vermischte Verbrennungsgase direkt durch das Grünmalz zu leiten.

Für den Vorgang des Trocknens, Darrens, von Malz, welches z.B. für die Bierherstellung verwendet wird, ist es von ausserordentlicher Bedeutung, nicht nur eine gezielte Trocknung des Grünmalzes zu erreichen, sondern zusätzlich durch eine definierte Temperatursteuerung der Trocknungsluft bestimmte Malzeigenschaften zu beeinflussen, die beim späteren Brauprozess die Qualität und den Geschmack des Endproduktes mitbestimmen. Neben diesen technologischen Anforderungen sind auch die wirtschaftlichen Parameter zu berücksichtigen, damit der Darrprozess sowohl vom Energieverbrauch als auch vom Bedienungsaufwand her möglichst rationell ablauft. Zudem müssen Voraussetzungen geschaffen werden, um energiesparende Komponenten optimal in die entsprechenden Anlagen integrieren zu können.

Diese Aufgabe wird je nach der individuellen Beurteilung der wirtschaftlichen und technologischen Randbedingungen im Stand der Technik mit unterschiedlichen Darrsystemen gelöst. Bekannt sind z.B. Einhorden- und Zweihorden-Darren, aber auch kontinuierliche Darren. Neben diesen, vom Trocknungsgut her gesehen, rein statischen Anlagen sind in den Jahren hoher Energiepreise auch dynamische Systeme mit kontinuierlicher Malzförderung entwickelt worden. Diese drei Darrentypen sind im Stand der Technik, z.B. in "Die Technologie der Malzbereitung" der Autoren Schuster/Weinfurtner/Narziss oder etwa in der Patentschrift DE ·A-3224471.109 im Detail beschrieben.

Die den Darrvorgang mitbestimmenden Faktoren sind insbesondere die Trocknungsgutmasse, der Trocknungsgutfeuchtegehalt, die Temperatur der verwendeten Umgebungsluft insbesondere Zuluft, die Feuchtigkeit der verwendeten Umgebungsluft insbesondere Zuluft, die Temperatur der erwärmten Trocknungsluft, die Temperatur des abströmseitigen, d.h. abluftseitigen, Luftmassenstroms, die Feuchtigkeit des abströmseitigen Luftmassenstroms, insb. absolute Abluftfeuchte während des Schwelkens, sowie die mechanische Leistung eines diesen Luftmassenstrom antreibenden Ventilators.

Wie oben diskutiert, gehören zur Malzherstellung die Arbeitsschritte: (1) Das Vortrocknen des Getreides; für eine Lagerung des Getreides darf der darin enthaltene Feuchtegehalt den Wert von 15% nicht übersteigen, so dass es notwendig sein kann, dass das Getreide vor einer Einlagerung zu trocknen ist. Ein solcher Trocknungsvorgang kann durch Belüften eines Getreidesilos vorgenommen werden. Selbstverständlich ist auch das Ernten des Getreides auf einen gewünschten Feuchtegehalt abstimmbar, womit der hier in Rede stehende Vortrocknungsschritt dann nicht vorgesehen werden müsste; (2) Das Weichen des Getreides; für das Weichen wird das Getreide derart befeuchtet, dass der Feuchtegehalt des Korns auf bis zu 46% ansteigt. Der Arbeitsschritt des Weichens dauert in der Regel 1 bis 2 Tage, wobei der Verbrauch elektrischer Energie daran beteiligter Prozesssysteme gegenüber nachfolgenden Prozessschritten zum Trocknen klein ist; (3) Die Keimung des Getreides; das geweichte Getreide keimt innerhalb von 3 bis 5 Tagen bei einem Feuchtegehalt von ca. 38 bis 46%, wobei mittels Luftbefeuchtung und/oder Aufspritzen von Wasser dieser Feuchtegehalt über die Dauer dieses Arbeitsschritts gewährleistet wird und mittels regelmässigen Wendens des Keimguts eine gleichmässig Keimung erfolgt. Der elektrischer Energieverbrauch ist beim vorliegenden Arbeitsschritt der Keimung zwar höher als beim vorangegangenen Weichen, aber immer noch erheblich kleiner als bei den nachfolgenden Prozessschritten zum Trocknen. Als Ergebnis liegt nach der Keimung das sogenannte Grünmalz vor, welches als solches nicht lagerfähig ist; und (4) Die Trocknung des Getreides (Darren), d.h. bei der Malzherstellung die Trocknung des Grünmalzes auf einer Darre zur Gewährleistung einer möglichen, nachfolgenden Lagerfähigkeit bzw. einer Transportfähigkeit. Beim Darren werden die malztypischen Farbstoffe und Aromastoffe gebildet. Beim Arbeitsschritt des Darrens wird das Grünmalz von einem Feuchtgehalt von 38 bis 46 % auf einstellige Werts von 3 bis 8 % getrocknet. Dies geschieht in zwei Teilschritten: Während des ersten Trocknungsabschnitts, dem Schwelken, bleibt die Temperatur der Abluft relativ konstant, wobei die abströmende Luft der Darre mit nahezu 100% mit Feuchtigkeit gesättigt ist. Die für das Schwelken notwendige Wärmeenergie dient im Wesentlichen zur Verdunstung der Feuchtigkeit auf der Kornoberfläche des Grünmalzes, unter der Spelze und in den leicht zugänglichen äusseren Schichten des Getreidekorns, wobei die in den Keimlingen vorhandenen Enzyme geschont werden. In der zweiten Phase, dem Abdarren, steigt die Temperatur auch im Korninneren stark an und dem Korn wird über den Kapillareffekt nach und nach das Wasser entzogen. Die abströmseitige Luft der Darre ist in diesem Stadium nicht mehr zu 100 % mit Feuchtigkeit gesättigt. Die Höhe der Temperatur sowie die Dauer dieser zweiten Phase entscheiden über die Malzfarbe. Je höher die Temperatur gewählt wird bzw. je länger das Abdarren dauert, umso dunkler wird das Malz bzw. werden die Malzkörner als Ergebnis des Malzprozesses.

Die unterschiedlichen Verbrauchswerte beim Trocknen von Malz rühren daher, dass der Trocknungsvorgang aus technologischen Gründen in zwei Phasen aufgeteilt wird, die sich im Wesentlichen durch verschiedene Zulufttemperaturen unterscheiden. Grünmalz für Brauzwecke kommt mit einem Wassergehalt von 38-46% auf die Darre und soll in der ersten Phase, dem sogenannten Schwelken, unter schonenden Verhältnissen bei Temperaturen um 60 °C auf einen Wassergehalt von etwa 20% oder weniger getrocknet werden. In dieser Phase bleibt die Kornoberfläche des Malzes feucht, so dass die Darrluft praktisch wasserdampfgesättigt das Malzbett verlässt. Dieser Abschnitt kann je nach Darrentyp 10 bis 24 Stunden dauern und zeichnet sich durch eine optimale Nutzung des Trocknungspotentiales der Darrluft aus. In der zweiten Phase, dem sogenannten Abdarren, soll ein Wassergehalt im Fertigmalz von unter 3-8% erreicht werden, wobei während der letzten Stunden, wiederum aus technologischen Gründen, die Darrluft zwischen 80 bis 90 °C, in manchen Fällen bis 110 °C, liegen soll. Die dabei gegebene ungenügende Ausnutzung des Trocknungspotentials wird durch einen markanten Temperaturanstieg der verbrauchten Darrluft angezeigt. Liegt nämlich die Ablufttemperatur am Ende der Schwelkzeit noch bei ca. 28 °C, so steigt sie bis zum Ende der Abdarrphase auf Werte zwischen 70 und 80 °C.

Beim Arbeitsschritt "Trocknung" wird üblicherweise der grösste Energieaufwand benötigt, und zwar zum einen in Form von Wärmeenergie für die anströmseitige Luft zum Darren und zum anderen in Form von elektrischer Energie für die Ventilation für diese Luft durch die Darre. Hierbei tritt die benötigte Energiemenge an Elektrizität für die Ventilation besonders hervor, da der Luftmassenstrom der Luft bekanntermassen in dritten Potenz (kubisch) zum Energieverbrauch steht (RPM ≈ P³ mit RPM = Revolutions Per Minutes (Umdrehungen pro Minute), d.h. 60rpm=1s⁻¹ in Einheiten der Drehzahl n), wobei aber dieser Luftmassenstrom lediglich eine lineare Abhängigkeit zur Drehzahl eines Ventilators aufweist (RPM ≈ V_{Luft}). Dies bedeutet, dass zum Beispiel eine Reduktion der Drehzahl n des Ventilators von 100% auf 90% eine Reduktion der Ventilatorleistungsaufnahme um 27% bedeuten kann, oder eine Reduktion der Drehzahl von 100% auf 80% eine Reduktion des Ventilatorleistungsaufnahme von rund 49% zur Folge haben kann. Allerdings ist zu beachten, dass bei einer Reduktion der Ventilatordrehzahl sich zwar die Ventilatorleistungsaufnahme um 49% reduziert, jedoch durch die Verlängerung der Schwelkzeit die Reduktion der Leistung nicht 1:1 zur Energieverbrauchseinsparung des gesamten Prozesses durchschlägt. In dem aufgeführten Beispiel (Reduktion der Ventilatorleistungsaufnahme um 49%) verringert die reduzierte Ventilatorenleistungsaufnahme, unter Berücksichtigung der verlängerten Schwelkdauer, den gesamten elektrischen Energiebedarf der Ventilatoren um ca. 39%. Mit anderen Worten ist es typischerweise einfacher, die Reduktion der Ventilatorleistung anzugeben, da diese direkt berechenbar ist, wobei jedoch zu beachten ist, dass der Energiebedarf aufgrund oben genannten Zusammenhangs (RPM ∼ V_{L}; RPM ∼ t; RPM ∼ P³) geringer ausfallen wird. Grundsätzlich ist jedoch der Feuchtegehalt von unter 10%, z.B. 3-8% oder unter 5% der Malzkörner nach dem Darren massgebliches Endziel.

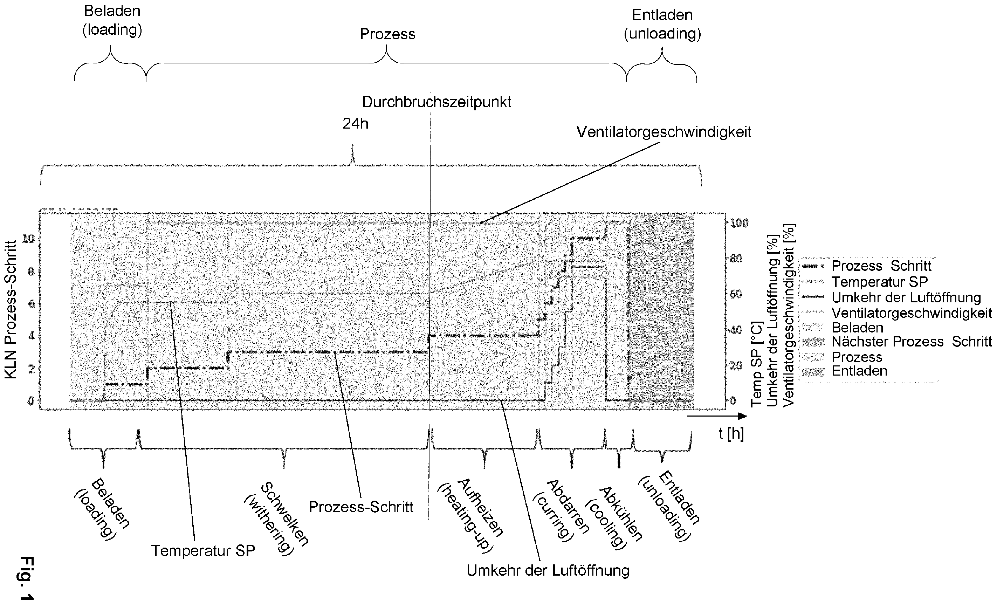

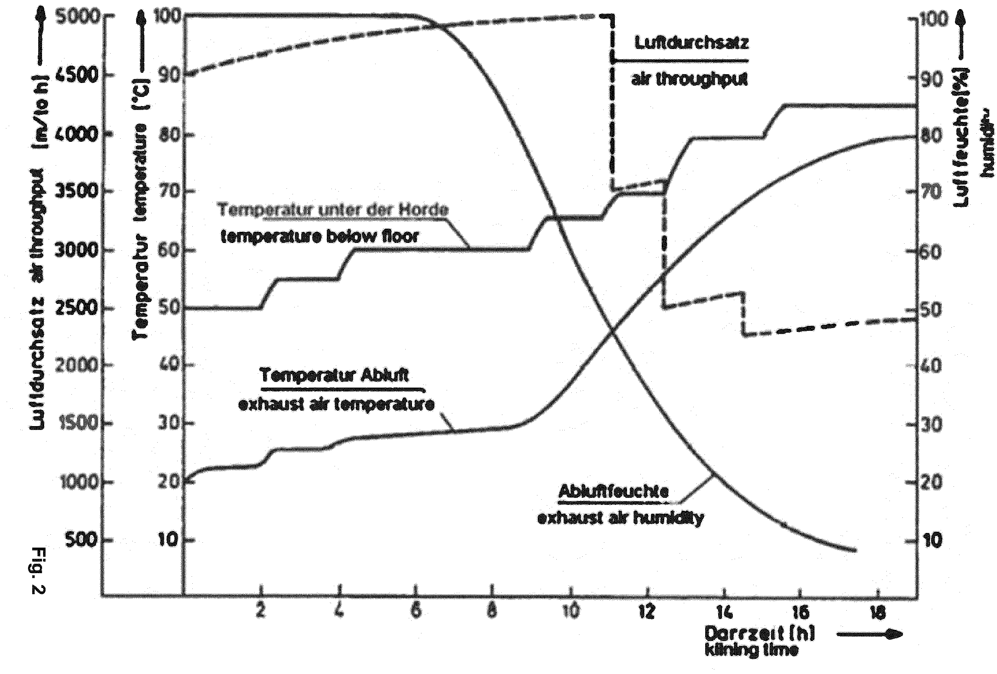

Wie Figur 1 illustriert, werden viele Darren typischerweise in einem bestimmten Rhythmus (z.B. 20h, 24h, 32h, 36h oder 48h etc.) betrieben, d.h.: jeden Tag zu etwa derselben Zeit wird die gesamte zu darrende Grünmalzmenge auf eine Horde geladen (gilt nur bei einem Vielfachen von 24h, da ansonsten der Start und das Ende des Darrprozesses entsprechend wandert), während zuvor das vorgetrocknete (geschwelkte), anschliessend fertiggetrocknete (abgedarrte) und schliesslich abgekühlte Malz entladen wurde. Die in Figur 1 unterschiedenen Phasen umfassen (i) das Beladen 2-3h (loading), (ii) das Schwelken 8-12h (withering), (iii) das Aufheizen 3-4.5h (heating-up), (iv) Abdarren 3.5h (curring), (v) das Abkühlen 0.5-2h (cooling), und schliesslich (vi) das Entladen 2-3h (unloading). Bei Zweihorden-Darren ist zu erwähnen, dass im Falle einer im 24-Stunden ·Rhythmus betriebenen Zweihorden-Darre jeden Tag zu etwa derselben Zeit die gesamte zu darrende Grünmalzmenge auf die eine Horde geladen, während auf der anderen, zweiten Horde das vorgetrocknete (geschwelkte) Malz vom Vortag zum Fertigtrocknen (Abdarren) bereitliegt. Damit wird eine Charge im 2 x 24 = 48-Stundenzyklus gedarrt. Dies setzt natürlich voraus, dass jede Horde eine gleiche volle Grünmalzmenge aufnehmen kann. Figur 2 zeigt ein anderes Darrschema einer kontinuierlichen Einhordendarre des Standes der Technik. Dabei wird die Temperatur unter der Horde kontinuierlich erhöht, bis der gewünschte Feuchtegehalt von 3 bis 8% der Malzkörner erreicht wird. Es ist zu erwähnen, dass es für Doppeldeckdarren auch andere Möglichkeiten, als die oben erwähnte, gibt, z.B. dass das Gut auf der Horde beleibt auf der es ist und statt dem Umladen auf die zweite Horde, der Luftstrom von der ersten Horde auf die zweite Horde umgeschaltet wird und umgekehrt. Die vorliegende Erfindung lässt sich jedoch unabhängig von der gewählten Darrenmöglichkeit anwenden, betrifft also sowohl Einhorden-Darren, als auch sämtliche mögliche Zweihorden-Darren, insbesondere dann, wenn sie in einem bestimmten Rhythmus betrieben werden.

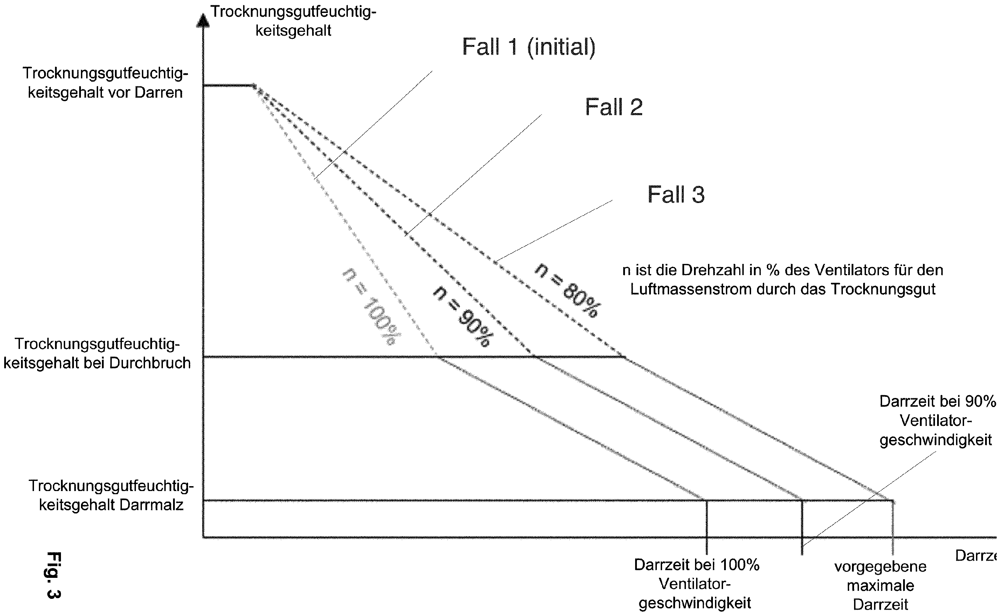

Wie Figur 3 weiter zeigt, ändert sich die gesamte Prozessdauer der Darrens mit der gewählten Drehzahl des Ventilators. Im Fall der Drehzahl n=100% ist die Darrzeit t kürzer als bei einer reduzierten Drehzahl n=90%. Beispielhaft ist vorliegend auch der Fall aufgeführt, bei welchem eine seitens der industriellen Mälzanlage vorgegebene maximale Darrzeit tₘₐₓ genau dann erreicht wird, wenn während des Schwelken, des Aufheizens und des Abdarrens der Ventilator lediglich mit einer Drehzahl von n=80% betrieben wird; hiermit ist die oben erwähnte Einsparung von rund 39% an elektrischer Energie für den Ventilator erreichbar. So ist es zwar denkbar, die Drehzahl für die verwendeten Ventilatoren auf Werte kleiner als 100% zu senken, um den Energieverbrauch zu senken, dies hätte aber den Zielkonflikt zur Folge, dass der Arbeitsschritt des Darrens mit Blick auf den angestrebten Feuchtegehalt von 3 bis 8% der Malzkörner eine entsprechende Verlängerung dieses Arbeitsschritts mit sich bringen würde, was einen entsprechenden zeitlichen Mehraufwand bedeuten würde und somit den weiteren Randbedingungen industrieller Malzanlagen entgegen laufen könnte. Es ist anzufügen, dass eine Reduktion der Ventilatorleistung bzw. dessen Drehzahl nicht unbedingt als konstante Reduktion angestrebt werden muss, sondern z.B. in Abhängigkeit von Randparametern wie gemessene schwankende Produkt-Anfangs- und Endfeuchten, wechselnde Wetterbedingungen, Qualitätsmessparameter und/oder ungewollte Prozessverlängerungen etc.. Zu den weiteren Randbedingungen solcher Mälzanlagen zählen unter anderem auch die Lagerkapazität des Getreides, die Keimdauer, und die maximal mögliche Trocknungszeit bzw. Darrzeit, welche das Beladen der Darre, das Schwelken, das Aufheizen, das Abdarren und das Entladen umfasst. Dabei ist diese Trocknungszeit ferner bestimmt durch anlagentypische bzw. anlagenspezifische Ladezeitpunkte der Darre und die maximal mögliche Trocknungszeit, womit sich ein spätester Entladezeitpunkt der Darre ergibt, bis zu welchem die Darre für eine nachfolgende Malzcharge wieder frei sein muss. Es ist anzumerken, dass in der Regel nicht nur die Darre zeitlich fixiert ist in diesen Prozessen, sondern auch die vorgelagerten Prozessschritte, wie z.B. Weichen und Keimen. Die möglich Energieeinsparung durch Reduktion der Ventilatordrehzahl ist somit von der maximal möglichen, anlagenspezifischen Trocknungszeit und den zugehörigen Zeiten für das Beladen und das Entladen abhängig, und zwar bei der vorgegebenen Grundbedingung des resultierenden Feuchtegehalts der Malzkörner bzw. des so genannten Darrmalzes.

Tabelle 1 illustriert schematisch ein Prozessschema einer Einhordenhochleistungsdarre im 24h Rhythmus, in diesem Beispiel zur Produktion von Pilsener Malz (Beispiel). Das Prozessschema der Tabelle 1 kann auch als ein beispielshafte Kontroll-GUI (Graphical User Interface) einer Darre des Standes der Technik dienen, umfassend (i) Statische Kontrolle: manuelle Anpassung der FAN-Geschwindigkeit während dem Abdarren, (ii) Triggern des nächsten Prozessschrittes, wenn vordefinierte Schwellenwerte erreicht werden, und (iii) Schwelken bei einer konstanten Ventilatorgeschwindigkeit von 100%. In vorliegendem Beispiel beträgt die Gesamtzeit 23.5h und die Trocknungszeit 18h.

| **Prozessschritt** | 0 | 1 | 2 | 3 | 4 | 5 | 6 | 7 |
|---|---|---|---|---|---|---|---|---|
| **Prozessabschnitt** | Beladen | | Schwelken | | Aufheizen | Abdarren | Kühlen | Entladen |
| **Max. Gesamtdauer (h)** | 2 | 1 | 12 | | 2.5 | 3 | 1 | 2 |
| **Max. Schrittdauer (min)** | 120 | 60 | 180 | 540 | 240 | 60 | 60 | 120 |
| **Min. Schrittdauer (min)** | - | 60 | 150 | 360 | 240 | 45 | 30 | - |
| **Prozesstemperatur (°C)** | - | 55 | 55 | 60 | 85 | 85 | 0 | - |
| **Weiterschaltkriterium Ablufttemperatur (°C)** | - | - | - | - | - | - | <50 | - |
| **Weiterschaltkriterium Abluftfeuchte (%)** | - | - | - | <80 | - | - | - | - |
| **Ventilatordrehzahl (%)** | - | 60 | 100 | 100 | 75-100 | 50-70 | 100 | - |
| **Rückluftanteil (%)** | - | 0 | 0 | 0 | 25-50 | 50-75 | 0 | 0 |

Aus der Druckschrift GB 2 287 527 A sind ein Verfahren zum Mälzen von Getreide und eine zugehörige Mälzanlage bekannt, wobei im Arbeitsschritt des Trocknens in der Darre der notwendige Luftmassenstrom durch das Trocknungsgutbett in Abhängigkeit der davon abströmseitig erfassten Luftfeuchtigkeit bereitgestellt wird, das heisst, dass mittels einer Drehzahlmodulation eines Ventilators für diesen Luftmassenstrom derart vorgenommen wird, dass eine Verbrauchsreduktion an elektrischer Energie für den eingesetzten Ventilator erreicht werden kann. Dem vorliegenden Stand der Technik bleibt hingegen verborgen, dass durch die alleinige Drehzahlmodulation in Abhängigkeit der abströmseitigen Luftfeuchtigkeit eine nur beschränkt einstellbare Verbrauchsreduktion an elektrischer Energie bedeuten kann. Selbst wenn - wie vorliegend vorgeschlagen - die beschriebene Drehzahlmodulation des Ventilators mit einer Verbrauchsreduktion elektrischer Energie einhergehen mag, so ist damit aber noch keine Verbrauchsoptimierung über die Gesamttrocknungszeit erreichbar.

Das Dokument GB 2 287 527 A offenbart ein Verfahren zum energieeffizienten Trocknen von gekeimten Saaten in einer Darre, das eine Drehzahlmodulation des Ventilators basierend auf dem Trocknungsgutfeuchtigkeitsgehalt aufweist. Weiter beschreibt DE 34 07 685 C1 ein Verfahren zum Trocknen von gekeimten Saaten in einer Darre mit Hilfe eines Ventilators zum Durchleiten eines Luftmassenstroms durch ein Trocknungsgutbett, wobei das Trocknen während einer vorgegebenen maximale Darrzeit durchgeführt wird (15 Stunden). Schliesslich beschreiben die Dokumente US 2020/263923 A1 und US 2015/354895 A1 Verfahren zum energieeffizienten Trocknen von Getreide in einem Offen mit Hilfe eines Ventilators zum Durchleiten eines Luftmassenstroms durch ein Trocknungsgutbett. Dabei wird ein Getreidefeuchtigkeitsgehalt erfasst wird und eine Umgebungsluftfeuchtigkeit einer für den Luftmassenstrom verwendeten Umgebungsluft. Während des Trocknens wird ein Trocknungsgutfeuchtigkeitsgehalt bis zu einem vorgegebenen Grenzwert überwacht.

### Zusammenfassung der Erfindung

Es ist eine Aufgabe der vorliegenden Erfindung ein Verfahren zum möglichst energieeffizienten Trocknen von Grünmalz bzw. eine Darre zur Durchführung des energieeffizienten Trocknens von Grünmalz bereitzustellen, womit die von den herkömmlichen Mälzanlagen bekannten, oben erwähnten Nachteile behoben werden. Insbesondere ist es eine Aufgabe der Erfindung eine Verbrauchsoptimierung hinsichtlich des elektrischen Energieverbrauchs bereitzustellen, insbesondere in Bezug auf die Regulierung des Luftmassenstroms mittels der Ventilation durch das Trocknungsgutbett.

Nach der vorliegenden Erfindung werden diese Gegenstände insbesondere mit den Merkmalen der unabhängigen Ansprüche erreicht. Darüber hinaus können aus den abhängigen Ansprüchen und den zugehörigen Beschreibungen weitere vorteilhafte Ausführungsformen abgeleitet werden.

Gemäss der vorliegenden Erfindung werden die obgenannten Gegenstände für eine Darre und entsprechendes Verfahren zum energieeffizienten Trocknen von Grünmalz in einer Darre mit Hilfe eines drehzahlmodulierten Ventilators zum Durchleiten eines Luftmassenstroms durch ein Trocknungsgutbett des Grünmalzes dadurch erreicht, dass das Trocknen während einer vorgegebenen maximalen Darrzeit (tₘₐₓ) durchgeführt wird, dass ein Getreidefeuchtigkeitsgehalt (Hg) und eine Getreidemasse (Mg) eines Getreides erfasst werden, welches nach einem Weichen und einem Keimen Basis für das Trocknungsgutbett des Grünmalzes darstellt, dass eine Umgebungsluftfeuchtigkeit (HI/Hla) einer für den Luftmassenstrom verwendeten Umgebungsluft erfasst wird, dass eine Anzahl von Wettervorhersagedaten (W1, W2) zumindest hinsichtlich der Umgebungsluftfeuchtigkeit (HI/Hla) erfasst werden, dass während des Trocknens ein Trocknungsgutfeuchtigkeitsgehalt (Ht) des Grünmalzes bis zu einem vorgegebenen Grenzwert (Gt) überwacht wird, und dass basierend auf dem Getreidefeuchtigkeitsgehalt (Hg), der Getreidemasse (Mg), der Umgebungsluftfeuchtigkeit (HI/Hla), der Anzahl Wettervorhersagedaten (W1, W2) hinsichtlich der Umgebungsluftfeuchtigkeit (HI) und basierend auf dem Trocknungsgutfeuchtigkeitsgehalt (Ht) des Grünmalzes (2) eine Drehzahlmodulation des Ventilators derart vorgenommen wird, dass die vorgegebene maximale Darrzeit (tₘₐₓ) erreicht und/oder eingehalten wird. Die Umgebungsluftfeuchtigkeit (HI) schliesst die absolute Luftfeuchtigkeit mit ein. Umfasst die Umgebungsluftfeuchtigkeit (HI) nur die relative Luftfeuchte, ist auch die Lufttemperatur als Wettervorhersage zu erfassen, so dass zusammen mit der vorhergesagten relativen Luftfeuchte die vorhergesagte absolute Luftfeuchte mittels der Vorrichtung generiert werden kann. Zur Unterscheidung von relativer und absoluter Abluftfeuchte ist anzufügen, dass die absolute Luftfeuchtigkeit die totale Menge an Wasser beschreibt, welche in einem bestimmten Raumvolumen enthalten ist. Die absolute Feuchtigkeit wird meistens in Gramm pro Kubikmeter (g/m³) angeben. Luft mit 30°C Temperatur kann 31 Gramm Wasser pro Kubikmeter aufnehmen (31 g/m³), während Luft mit 5°C Temperatur nur 7 Gramm Wasser pro Kubikmeter aufnehmen (7 g / m³) kann. Die relative Luftfeuchtigkeit hingegen gibt Aufschluss darüber, wie viel Prozent die Luft mit Wasser(dampf) gesättigt ist. Grundsätzlich gilt: je wärmer die Lufttemperatur, desto mehr Wasser kann diese aufnehmen. Bei 100% relativer Feuchte ist die Luft vollständig mit Wasser(dampf) gesättigt. Bei 50% relativer Feuchte ist die Luft zur Hälfte mit Wasser(dampf) gesättigt. Wird 100% relative Feuchte überschritten, so wandelt sich die überschüssige Feuchtigkeit in Kondenswasser. Betreffend der absoluten Abluftfeuchte während des Schwelkens kann das System erfindungsgemäss sowohl eine Vorhersage dieser Abluftfeuchte auf Basis der Wetterdaten und Abluftfeuchte zu Beginn des Darrens durchführen. Alternativ kann es einen festen einzustellenden oder anderweitig vordefinierbaren Erfahrungswert umfassen.

Unter der maximalen Darrzeit ist vorliegend die Gesamtverweildauer eines Trocknungsguts in einer Darre zu verstehen, wobei die Darrzeit zwischen dem Be- und Entladen des Trocknungsguts in die bzw. aus der Darre die Arbeitsschritte des Schwelkens, des Aufheizens, des Abdarrens und des Abkühlens umfasst. Das Be- und Entladen sowie das Abkühlen werden im Wesentlichen von der Trocknungsgutmasse bzw. des Trocknungsgutvolumens bestimmt, wobei das Abkühlen insbesondere typischerweise zudem stark von den Parametern des Aussenluftzustandes abhängig, wie Temperatur abhängig ist; weitere Faktoren beeinflussen die Zeiten des Be- und Entladens bzw. des Abkühlens nur geringfügig, so dass diese Zeiten mit Blick auf eine vorgegebene maximale Darrzeit oder einer Enerigeverbrauchsoptimierung kaum beeinflussbar sind. Die nacheinander durchgeführten Arbeitsschritte des Schwelkens, des Aufheizens und des Abdarrens sind demgegenüber massgeblich von den oben erwähnten Randbedingungen geprägt, namentlich von dem Getreidefeuchtigkeitsgehalt, der Getreidemasse, der Umgebungsluftfeuchtigkeit, der Anzahl Wettervorhersagedaten hinsichtlich der Umgebungsluftfeuchtigkeit und dem Trocknungsgutfeuchtigkeitsgehalt des Grünmalzes, wobei dieser Trocknungsgutfeuchtigkeitsgehalt des Grünmalzes die Prozesszeiten für das Schwelken, das Aufheizen und das Abdarren massgeblich bestimmt. Es ist darauf hinzuweisen, dass in einem ersten Schritt zur Energieoptimierung auch nur der Schwelkteil als zeitlich variabler Anteil angesehen werden kann, wobei das Aufheizen und Darren als zeitlich fix angesehen wird. Als Ausführungsvariante kann zur Energieoptimierung auch der ganze Prozess umfassend Schwelken, Aufheizen und Darren einbezogen werden.

Die Erfindung hat u.a. den Vorteil, dass eine Drehzahlmodulation der Ventilation durch das Trocknungsgut so genutzt werden kann, dass unter Einhaltung des angestrebten Trocknungsgutfeuchtigkeitsgehalt des Grünmalzes weitestgehend die gesamte Darrzeit auszunutzen und/oder einzuhalten wird und dabei die Energieeffizienz der Vorrichtung optimiert wird. Dass bedeutet, dass die Drehzahl des Ventilators für den notwendigen Luftmassenstrom während des Schwelkens, des Aufheizens und des Abdarrens derart moduliert wird, dass mit Erreichen des Endes der vorgegebenen maximale Darrzeit der geforderte Trocknungsgutfeuchtigkeitsgehalt des Grünmalzes vorliegt. Wie bereits erwähnt kann als Ausführungsvariante die Modulation der Drehzahl nur beim Schwelken erfolgen. Zur weiteren Optimierung können z.B. bei der Modulation auch das Aufheizen und/oder das Abdarren miteinbezogen werden. Somit werden die Arbeitsschritte des Schwelkens, des Aufheizens und des Abdarrens zeitlich ausgedehnt, was deutet, dass eine Drehzahlreduktion des Ventilators für den Luftmassenstrom ermöglicht wird und damit eine markante elektrische Energieeinsparung. Ferner ist von Vorteil, dass die vorliegende Verbrauchoptimierung neben der einfachen Verbrauchsreduktion auch deren Verbrauchsverteilung über die Zeit, namentlich die Verbrauchverteilung elektrischer Energie über die -oben angesprochene- maximal mögliche, anlagenspezifische Trocknungszeit bzw. Darrzeit mit sich bringt, womit der Elektrizitätsverbrauch über alle Arbeitsschritte in industriellen Mälzanlagen glättet, was letztlich auch einen nachhaltigeren Ressourcen-Umgang bedeutet. Stromeinsparungen bzw. Einsparungen beim Leistungsverbrauch des Ventilators durch die vorliegende Erfindung sind klar. Jedoch erfolgen auch weitere Einsparungen beim Energieverbrauch durch die Erfindung, insbesondere z.B. thermische Energieeinsparungen, da z.B. ein Abkühlen der Anlage durch die bessere zeitliche Ausnutzung verhindert wird, oder Einsparungen durch die entstandene höhere spezifische Wärmetauscherfläche bei reduzierten Volumenströmen. Ferner ist mittels des erfindungsgemässen Verfahrens eine Vorhersage hinsichtlich der zeitlichen Verteilung des Energieverbrauchs insbesondere während der Arbeitsschritts des Schwelkens, des Aufheizens und des Abdarrens möglich. Solche Energieverbrauchsvorhersagen sind heutzutage auch mit signifikanten wirtschaftlichen Aspekten verknüpft, womit starke Anreize geschaffen werden, um den Energieverbrauch nachhaltig zu glätten und/oder zu reduzieren. Dabei spielen letztlich auch die Randbedingungen an einem jeweiligen Einsatzort der zum Einsatz gelangenden industriellen Mälzanlage eine einschlägige Rolle; zu diesen Randbedingung gehören unter anderem Stromlieferverträge mit verhandelten Spitzenverbrauchswerten genauso dazu, wie die regional individuellen, klimatischen Gegebenheiten der Umgebung oder die intrinsischen Eigenschaften des zu mälzenden Getreides selbst. Ein weiterer Vorteil der jeweiligen Ausnutzung der maximalen Darrzeit ist bei industriellen Mälzanlagen darin zu sehen, dass diese wegen kürzerer Standzeiten zwischen Chargenwechseln weniger auskühlen und somit eine Restwärme aufgrund der beachtlichen Wärmekapazität in der Mälzanlage verbleibt und sich damit der Energieaufwand für eine notwendige Aufwärmung der Mälzanlage mit Beginn einer nächsten Darrphase verringert.

### Kurze Beschreibung der Zeichnungen

Die vorliegende Erfindung wird anhand von Beispielen mit Bezug auf die Zeichnungen, in denen sie dargestellt ist, näher erläutert:
Wie Figur 1 zeigt ein Diagramm, das beispielshaft illustriert, wie viele Darren typischerweise in einem bestimmten Rhythmus (z.B. 20h, 24h, 32h, 36h oder 48h etc.) betrieben werden, d.h. jeden Tag zu etwa derselben Zeit wird die gesamte zu darrende Grünmalzmenge auf eine Horde geladen, während zuvor das vorgetrocknete (geschwelkte), anschliessend fertiggetrocknete (abgedarrte) und schliesslich abgekühlte Malz entladen wurde. Die in Figur 1 unterschiedenen Phasen umfassen (i) das Beladen 2-3h (loading), (ii) das Schwelken 8-12h (withering), (iii) das Aufheizen 3-4.5h (heating-up), (iv) Abdarren 3.5h (curring), (v) das Abkühlen 0.5-2h (cooling), und schliesslich (vi) das Entladen 2-3h (unloading). Bei Zweihorden-Darren ist zu erwähnen, dass im Falle einer im 24 Stunden-Rhythmus betriebenen Zweihorden-Darre jeden Tag zu etwa derselben Zeit die gesamte zu darrende Grünmalzmenge auf die eine Horde geladen wird, während auf einer zweiten, anderen Horde das vorgetrocknete (geschwelkte) Malz vom Vortag zum Fertigtrocknen (Abdarren) bereitliegt. Damit wird in diesem Falle eine Charge eigentlich im 2 x 24 = 48-Stundenzyklus gedarrt. Dies setzt natürlich voraus, dass jede Horde eine gleiche volle Grünmalzmenge aufnehmen kann. Es ist noch einmal zu erwähnen, dass es für Doppeldeckdarren auch andere Möglichkeiten, als die oben erwähnte, gibt, z.B. dass das Gut auf der Horde beleibt auf der es ist und statt dem Umladen auf die zweite Horde, der Luftstrom von der ersten Horde auf die zweite Horde umgeschaltet wird und umgekehrt. Die vorliegende Erfindung lässt sich jedoch unabhängig von der gewählten Darrenmöglichkeit anwenden, betrifft also sowohl Einhorden-Darren, als auch sämtliche mögliche Zweihorden-Darren, insbesondere dann, wenn sie in einem bestimmten Rhythmus betrieben werden.

Figur 2 zeigt ein beispielhaftes Diagramm, das schematisch ein anderes Darrschema einer kontinuierlichen Einhordendarre des Standes der Technik illustriert. Dabei wird die Temperatur unter der Horde kontinuierlich oder schrittweise, z.B. in zeitlichen Etappen, erhöht, bis der gewünschte Feuchtegehalt von 3 bis 8% der Malzkörner erreicht wird. Schwelken 2 h bei 50 °C und 2 h bei etwa 57 °C und Abdarren etwa 5.5h bei 62 °C, etwa 2h bei 68 °C, etwa 1.5h bei 72°C, etwa 2h bei 80 °C und etwa 4h bei 85 °C d. h. bis auf eine Ablufttemperatur von ca. 80 °C. Aufheizen etwa 4 h von 65 auf 80 °C, Ausdarren etwa 5 h bei 80-85 °C. Damit ergibt sich eine Gesamtdauer des Darrprozesses d.h. von Schwelken und Darren, von 19 h. Wie erwähnt wird beim Darren das Grünmalz von einem Feuchtgehalt von 38 bis 46 % auf einen einstelligen Wert von 3 bis 8 % getrocknet. Dies geschieht in den zwei Teilschritten des Schwelken und des Abdarren: Während dem Schwelken bleibt die Temperatur der Abluft relativ konstant (siehe Figur 2), wobei die abströmende Luft der Darre mit nahezu 100% mit Feuchtigkeit gesättigt ist. In der zweiten Phase des Abdarren steigt die Temperatur auch im Korninneren stark an und dem Korn wird über den Kapillareffekt nach und nach das Wasser entzogen. Die abströmseitige Luft der Darre ist in diesem Stadium nicht mehr zu 100 % mit Feuchtigkeit gesättigt (siehe Figur 2).

Figur 3 zeigt ein beispielhaftes Diagramm, das schematisch illustriert, wie sich die gesamte Prozessdauer der Darrens mit der gewählten Drehzahl des Ventilators ändert. Im Fall der Drehzahl n=100% ist die Darrzeit kürzer als bei einer kleineren Drehzahl n=90%. Beispielhaft ist vorliegend auch der Fall aufgeführt, bei welchem eine seitens der industriellen Mälzanlage vorgegebene maximale Darrzeit genau dann erreicht wird, wenn während des Schwelken, des Aufheizens und des Abdarrens der Ventilator lediglich mit einer Drehzahl von n=80% betrieben wird; hiermit ist die oben erwähnte Einsparung von rund 39% an elektrischer Energie für den Ventilator erreichbar. Wiederum ist zu beachten, dass bei einer Reduktion der Ventilatordrehzahl sich zwar die Ventilatorleistungsaufnahme um 27% bzw. 49% reduziert, jedoch durch die Verlängerung der Schwelkzeit die Reduktion der Leistung nicht 1:1 zur Energieverbrauchseinsparung des gesamten Prozesses durchschlägt. In dem aufgeführten Beispiel (Reduktion der Ventilatorleistungsaufnahme um 49%) verringert die reduzierte Ventilatorenleistungsaufnahme, unter Berücksichtigung der verlängerten Schwelkdauer, den gesamten elektrischen Energiebedarf der Ventilatoren um ca. 39%. Mit anderen Worten ist als typischerweise einfacher, die Reduktion der Ventilatorleistung anzugeben, da diese direkt berechenbar ist, wobei jedoch zu beachten ist, dass der Energiebedarf aufgrund oben genannten Zusammenhangs (RPM ∼ V_{L}; RPM ∼ t; RPM ∼ P³) geringer ausfallen wird. Grundsätzlich ist jedoch der Feuchtegehalt von unter 10%, z.B. 3-8% oder unter 5% der Malzkörner nach dem Darren massgebliches Endziel. Figur 3 zeigt drei Fälle, nämlich eine Ausgangssituation (Fall 1 (initial)), einen Fall 2 und einen Fall 3. Bei der Initialsituation wird der Ventilator mit 100% Drehzahlgeschwindigkeit betrieben, die Schwelkzeit ist dabei 10 Stunden (withering time = 10h) und die gesamte Darrzeit ist 17 Stunden (total kiln time 17h), wobei der Energieverbrauch bei 5'500 kWhₑₗ liegt. Im Fall 2 wird der Ventilator mit 90% Drehzahlgeschwindigkeit betrieben, die Schwelkzeit ist dabei 11 Stunden, die gesamte Darrzeit ist 18 Stunden und der Energieverbrauch liegt bei 4'455 kWhₑₗ. Dies entspricht einer Reduktion des Energieverbrauchs um -19% der gesamten, vom Ventilator verbrauchten, elektrischen Energie, wobei die Leistungsaufnahme des Ventilators um 27% gesenkt wird, sich jedoch die Schwelkzeit und die Darrzeit um jeweils 1h verlängern. Im Fall 3 wird der Ventilator mit 80% Drehzahlgeschwindigkeit betrieben, die Schwelkzeit ist dabei 12 Stunden und die gesamte Darrzeit ist 19 Stunden, wobei der Energieverbrauch bei 3'420 kWhₑₗ liegt. Dies entspricht einer Reduktion des Energieverbrauchs um -38% der gesamten, vom Ventilator verbrauchten, elektrischen Energie, wobei die Leistungsaufnahme des Ventilators um 49% gesenkt wird, sich jedoch die Schwelkzeit und die Darrzeit um je 2h verlängern. Fall 3 entspricht der maximal möglichen Verlängerung der Darrzeit innerhalb des Prozesses, ohne dass die festen vorgesehenen Zeiten der Prozessschritte, insbesondere der Darrzeit tangiert werden. Mit anderen Worten senken längere Darrzeiten bei tieferen Ventilatordrehzahlen den Energieverbrauch. Die erfindungsgemässe Vorrichtung und Verfahren erlauben die Ventilatordrehzahlen so anzupassen, dass eine optimale Ausnutzung der zur Verfügung stehenden Darrphase zum zeitlich möglichen Maximum erreicht wird.

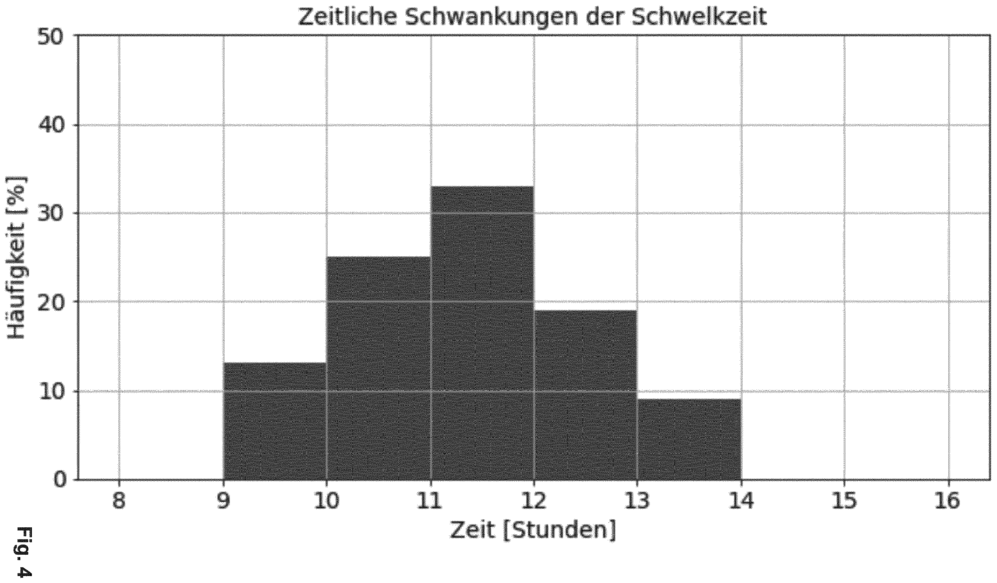

Figur 4 zeigt ein Diagramm, welches schematisch illustriert, dass das Schwelken und entsprechende Zeiten nicht konstant sind, sondern z.B. beeinflusst von: (i) Witterungsbedingungen (z.B. abs. Feuchte der Frischluft/Zuluft), (ii) Anfangsfeuchtegehalt von Malz, (iii) Batch-Ladung, und (iv) Luftmassenstrom: Abhängig von Gebläsedrehzahl, Losgröße, Beladungsqualität. Weitere Einflussgrössen können z.B. Trocknungstemperatur, Abluftfeuchte, etc. umfassen. Es ist darauf hinzuweisen, dass im Stand der Technik bisher nichtbeeinflussbare Grössen, wie z.B. die Entwicklung der Luftfeuchte über die Zeit, z.B. basierend auf Wettervorhersage-Messparametern, nicht berücksichtigt werden können.

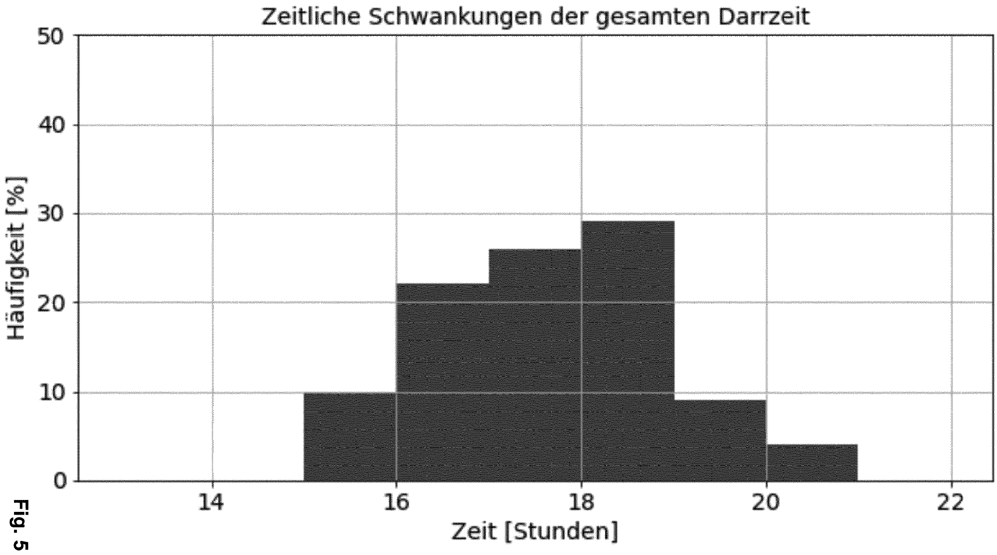

Figur 5 zeigt ein Diagramm, welches schematisch illustriert, dass die resultierenden Gesamtdarrungszeiten insbesondere abhängig sind von (i) Ladezeit (Schritt 1), (ii) Schwelken (Schritt 3) höchste Auswirkung auf die Variabilität, und (iii) abschliessendem Abdarren (Schritt 10)

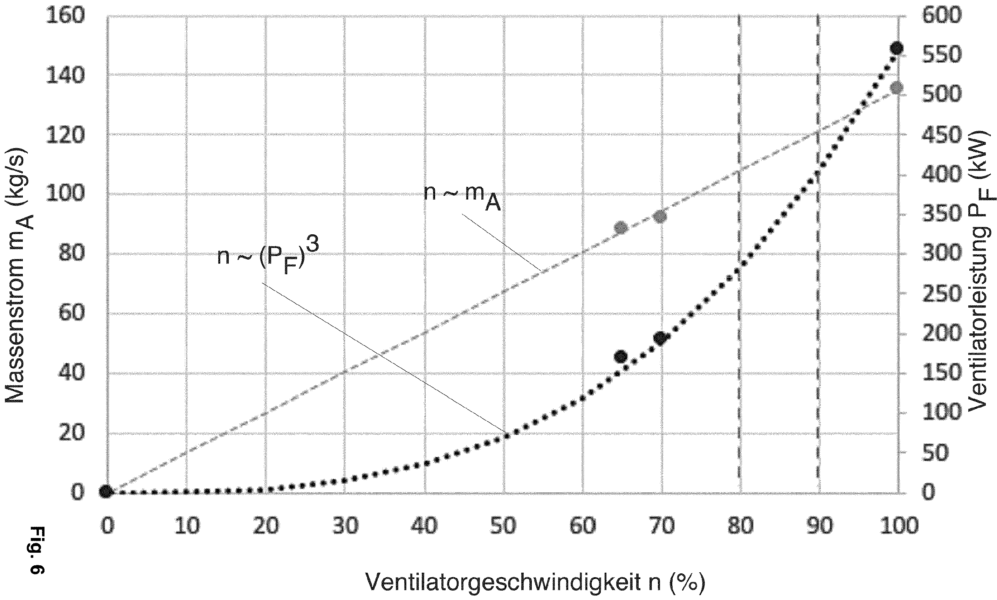

Die Figur 6 zeigt ein Diagramm, welches schematisch die Korrelation der Ventilatordrehzahl (n) illustriert mit: (i) linear mit dem Luftmassenstrom: n ∼ ṁA, und (ii) in der dritten Potenz mit der Leistungsaufnahme: n ∼ (P_{F})³. Eine Reduzierung der Ventilatordrehzahl um 10% verlängert die Trocknung um 10%, eine Reduzierung der Ventilatordrehzahl um 10 % reduziert die Ventilatorleistung um 27 %, während z.B. eine Reduzierung der Ventilatordrehzahl um 20 % die Trocknung um 20 % verlängert und die Reduzierung der Ventilatordrehzahl um 20 % die Ventilatorleistung um 49 % reduziert.

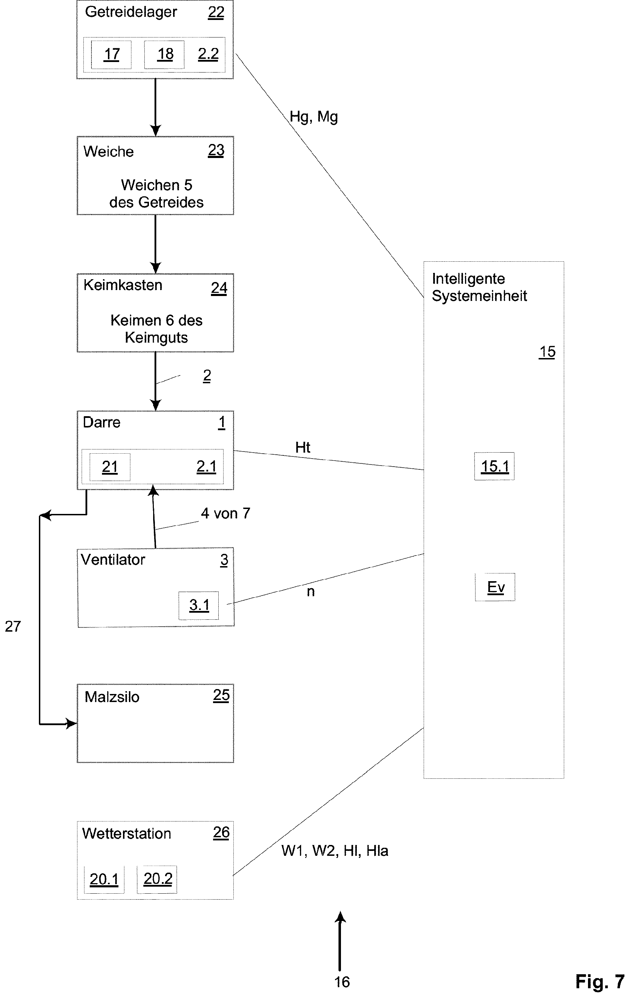

Die Figur 7 illustriert schematisch eine Architektur einer möglichen Realisierung einer Ausführungsvariante zum energieeffizienten Trocknen von Grünmalz 2 in einer Darre 1 mit Hilfe eines drehzahlmodulierten Ventilators 3 zum Durchleiten eines Luftmassenstroms 4 durch ein Trocknungsgutbett 2.1 des Grünmalzes 2. Das Trocknen wird dabei während einer vorgegebenen maximalen Darrzeit (tₘₐₓ) durchgeführt.

### Detaillierte Beschreibung bevorzugter Ausführungsvarianten

Die Figur 7 illustriert schematisch eine Architektur einer möglichen Realisierung einer Ausführungsvariante zum energieeffizienten Trocknen von Grünmalz 2 in einer Darre 1 mit Hilfe eines oder mehreren drehzahlmodulierten Ventilatoren 3 zum Durchleiten eines Luftmassenstroms 4 durch ein Trocknungsgutbett 2.1 des Grünmalzes 2. Das Trocknen wird dabei während einer vorgegebenen maximalen Darrzeit (tₘₐₓ) durchgeführt.

Ein Getreidefeuchtigkeitsgehalt (Hg) und eine Getreidemasse (Mg) eines Getreides 2.2 werden erfasst. Das Getreides 2.2 stellt nach einem Weichen 5 und einem Keimen 6 Basis für das Trocknungsgutbett 2.1 des Grünmalzes 2 dar. Mittels Messsensorik wird eine Umgebungsluftfeuchtigkeit (Hl) einer für den Luftmassenstrom 4 verwendeten Umgebungsluft 7 erfasst. Zusätzlich kann z.B. eine absolute Umgebungsluftfeuchtigkeit (Hla) der für den Luftmassenstrom 4 verwendeten Umgebungsluft 7 erfasst werden.

Mittels Messstationen werden Wettermessdaten erfasst. Basierend auf den Wettermessdaten wird eine Anzahl von Wettervorhersagedaten (W1, W2) zumindest hinsichtlich der Umgebungsluftfeuchtigkeit (HI) erfasst oder generiert. Die Anzahl von Wettervorhersagedaten (W1, W2) können z.B. mindestens hinsichtlich der absoluten Umgebungsluftfeuchtigkeit (Hla) generiert oder erfasst werden. Die Anzahl von Wettervorhersagedaten (W1, W2) können z.B. hinsichtlich der absoluten Umgebungsluftfeuchtigkeit (Hla) für die ab einem Beladen 8 der Darre 1 und/oder ab Start des Ventilators der Darre nächsten 12 Stunden fortlaufend, d.h. dynamisch, generiert oder ermittelt werden. Der Begriff "ab einem Beladen der Darre" kann in dieser Offenbarungsschrift die Beladung miteinschliessen oder voraussetzen, dass die Beladung abgeschlossen wurde. Der Grund dafür liegt darin, dass bei bestimmten Ausführungsvarianten bereits vor Ende des Beladens, z.B. ab der Hälfte der Beladungszeit, der Ventilator bereits gestartet und mit der Trocknung begonnen wird, um keine Zeit zu verlieren. Während des Trocknens wird der Trocknungsgutfeuchtigkeitsgehalt (Ht) des Grünmalzes 2 bis zu einem vorgegebenen Grenzwert (Gt) überwacht. Der Grenzwert (Gt) des Trocknungsgutfeuchtigkeitsgehalts (Ht) des Grünmalzes kann z.B. maximal 3-8% betragen, z.B. 5%. Andere Werte sind ebenfalls möglich. Z.B. kann auch der Zielwassergehalt nach der Schwelkphase definiert sein, beispielsweise auf eine Bereich von 12-20%.

Basierend auf dem Getreidefeuchtigkeitsgehalt (Hg), der Getreidemasse (Mg), der Umgebungsluftfeuchtigkeit (HI), der Anzahl Wettervorhersagedaten (W1, W2) werden hinsichtlich der Umgebungsluftfeuchtigkeit (HI) und basierend auf dem Trocknungsgutfeuchtigkeitsgehalt (Ht) des Grünmalzes 2 eine Drehzahlmodulation des Ventilators 3 derart vorgenommen wird, dass die vorgegebene maximale Darrzeit (tₘₐₓ) erreicht und/oder eingehalten wird. Die Erfassung des Getreidefeuchtigkeitsgehalts (Hg), der Getreidemasses (Mg), der Umgebungsluftfeuchtigkeits (HI), der Anzahl Wettervorhersagedaten (W1, W2) hinsichtlich der Umgebungsluftfeuchtigkeit (HI) und des Trocknungsgutfeuchtigkeitsgehalt (Ht) des Grünmalzes (2) kann z.B. mittels einer intelligenten Systemeinheit 15 der Darre erfolgen, mit der die Drehzahlmodulation des Ventilators 3 derart vorgenommen wird, dass die maximale Darrzeit (tₘₐₓ) erreicht und/oder eingehalten wird und eine Energieverbrauchsvorhersage (Ev) ermittelt wird.

Zum Trocknen des Grünmalzes 2 kann z.B. der Ventilator 3 zum Erzeugen des Luftmassenstroms 4 durch das Trocknungsgutbett 2.1 des Grünmalzes 2 über ein Datenübertragungsnetzwerk 16 bidirektional mit der intelligenten Systemeinheit 15 verbunden sein, wobei die intelligente Systemeinheit 15 mit einem Getreidefeuchtigkeitsgehaltssensor 17 und/oder einem Getreidemassensensor 18 und/oder einem Umgebungsluftfeuchtigkeitssensor 19 und/oder einer Anzahl Sensoren für Wettermessdaten und einer Vorhersageeinheit zum Generieren der Wettervorhersagedaten 20.1, 20.2 und/oder einem Trocknungsgutfeuchtigkeitsgehaltsensor 21 des Grünmalzes 2 verbunden sein, wobei die intelligente Systemeinheit 15 ferner ein Optimierungsmittel 15.1 zum dynamischen Optimieren und/oder Anpassen und/oder Lernen von Arbeitsschritten 8 - 14 zum energieeffizienten Trocknen von Grünmalz 2 umfasst. Zur dynamischen Drehzahlmodulation des Ventilators 3 können z.B. die Optimierungsmittel 15.1 der intelligenten Systemeinheit 15 über das Datenübertragungsnetzwerk 16 mit einem Drehzahlstellglied 3.1 des Ventilators 3 zwecks dynamischer Drehzahlmodulation des Ventilators 3 verbunden sein. Als Ausführungsvariante können auch Klappeneinstellungen, z.B. der Zuluft, Abluft oder bei den Druckventilatoren vom der intelligenten Systemeinheit 15 berücksichtigt werden, bzw. als Eingangs-/ oder Ausgangsparameter verwendet werden. Wie beschreiben, erfolgt die Belüftung der Darre über einen entsprechend bemessenen Ventilator. Er zieht die Luft entweder von einem Frischluftschacht oder von einem Rückluftkanal an und drückt sie in den darüber befindlichen Druckraum. Von dort durchdringt die Luft das auf der Horde liegende Gut und wird in den Abluftkanal abgeführt. Dieser bildet mit dem Rückluftkanal einen gemeinsamen Schacht. Die Wegeführung der Luft kann z.B. durch eine schliessende Rückluftklappe oder einen Schieber bewirkt werden. Die Luftbeförderung durch einen Ventilator sichert bei gleicher Höhe des Gutes insbesondere eine möglichste gleichmässige Durchlüftung. Weiter kann die Regulation der Luftmenge dabei auch durch Abluftschieber, und/oder durch Klappen in den Kanälen vor dem Ventilator realisiert sein. Allerdings erfolgt die direkteste Regulierungsmöglichkeit über (oder zusätzlich über) die Ventilatordrehzahl z.B. mit Hilfe frequenzgeregelter Motoren, wobei diese von der intelligenten Systemeinheit 15 z.B. in Abhängigkeit von der Temperaturdifferenz der oberen Malzschicht zur Einströmluft automatisch gesteuert wird. Figur 2 zeigt ein beispielhaftes Schema eines solchen Ablaufs. Schwelken 2 h bei 50°C und 2 h bei etwa 57 °C und Abdarren etwa 5.5h bei 62°C; etwa 2h bei 68°C; etwa 1.5h bei 72°C; etwa 2h bei 80°C, und etwa 4h bei 85°C d. h. bis auf eine Ablufttemperatur von ca. 80 °C. Aufheizen in 4 h von 65 auf 80 °C, Ausdarren 5 h 80-85 °C. Damit ergibt sich eine Gesamtdauer von Schwelken und Darren von 19 h. Bei einer Ablufttemperatur von 40 °C kann beispielsweise eine zusätzliche Drehzahlregulierung einsetzen. Die Differenz zur Temperatur im Innenraum kann zu dieser Zeit z.B. noch etwa 30 °C betragen. Bei einer Ablufttemperatur von 30 °C, also schon vor Beginn des Ausdarrens, kann z.B. eine Umluftklappe geöffnet werden. Der Rückluftanteil gegen Ende der Darrzeit kann dann z.B. 50-70 % betragen. Wie erwähnt wird beim Darrens das Grünmalz von einem Feuchtgehalt von 38 bis 46 % auf einen einstelligen Wert von 3 bis 8 % getrocknet. Dies geschieht in den zwei Teilschritten des Schwelken und des Abdarren: Während dem Schwelken, bleibt die Temperatur der Abluft relativ konstant (siehe Figur 2), wobei die abströmende Luft der Darre mit nahezu 100% mit Feuchtigkeit gesättigt ist. In der zweiten Phase des Abdarren steigt die Temperatur auch im Korninneren stark an und dem Korn wird über den Kapillareffekt nach und nach das Wasser entzogen. Die abströmseitige Luft der Darre ist in diesem Stadium nicht mehr zu 100 % mit Feuchtigkeit gesättigt (vgl. Figur 2).

Als Ausführungsvariante kann z.B. die absolute Abluftfeuchte während des Schwelkens bestimmt werden. Die Vorrichtung kann z.B. ein Vorhersagemodul umfassen, mittels welchem basierend auf gemessenen Wetterdaten, wie z.B. Umgebungstemperatur, Luftdruck, Luftfeuchte der Umgebung etc., diese Abluftfeuchte sowie die Abluftfeuchte zu Beginn des Darrens in einem forward-looking Verfahren bestimmt wird. Das Vorhersagemodul kann als maschinen-lernende Einheit realisiert sein, welche in einer supervised Lernphase mittels einem Feedback-Loop zum übertragen entsprechender Messparameter gelernt wird. Alternativ kann auch erst mittels Klassierung durch eine unsupervised Lernstruktur die mit einer bestimmten gemessenen Abluftfeuchte assoziierten Messparameter-Pattern erfasst werden. Diese können direkt zum vorhersagenden Bestimmen der Abluftfeuchte oder als Input für die supervised Lernstruktur dienen.

Als Ausführungsvariante kann z.B. für den Arbeitsschritt des Schwelkens 9 des Grünmalzes 2 eine Energieverbrauchsvorhersage (Ev) der Darre 1 generiert werden. Ebenfalls kann z.B. für einen Arbeitsschritt des Aufheizens 11 des Grünmalzes 2 in der Darre 1 die Energieverbrauchsvorhersage (Ev) generiert werden. Weiter kann z.B. auch für den Arbeitsschritt des Abdarrens 12 des Grünmalzes 2 die Energieverbrauchsvorhersage (Ev) der Darre ermittelt oder generiert werden. Als eine weitere Ausführungsvariante kann z.B. eine spezifischer Selbsttest als Savety Test mittels der Vorrichtung durchgeführt werden. Der Savety-Check kann folgende Implementations-Schritte umfassen: (i) Prüfen, ob die Umgebungsbedingungen positiv sind und die implementierte Savety-Check Struktur angewandt werden kann; (ii) Überprüfung/Scann der Sensoren: Detektieren von definierten Bedingungen, wie z.B. ist einer der beiden Ventilatoren, einer der beiden Brenner, der Temperatur- und der Feuchtigkeitssensor über KLN während Schritt 0-1-2 mehr als 10min in Störung ist; (iii) Überprüfung der absoluten Frischluftfeuchte nach einem definierten Grenztriggerwert: Z.B. falls sie für eine Variante nicht mehr als 10 g/kg für die Stufe 2 betragen sollte etc.; (iv) Überprüfung der Dauer von Schritt 1: Beispielsweise sollte sie nicht mehr als 2,5 Stunden betragen; (v) Überprüfung der Dauer von Schritt 2: Beispielsweise sollte sie nicht mehr als 3 Stunden betragen; (vi) Kontrolle der absoluten Delta-Feuchte über der Ofen-AH-Frischluft: Beispielsweise sollte sie mehr als 10 g/kg betragen; (vii) Grünmalzgehalt: z.B. Prüfen, ob der Gehalt < 45% ist; (viii) Abbruch des Verfahrens, falls eines der Triggerkriterien nicht erfüllt ist. Ebenfalls als Ausführungsvariante können RisikoPuffer vorgesehen sein: (i) Basiert die Berechnung auf einem m.c. nach Anwelken von 12 % → wahrscheinlicher 15 bis 18% (3-5% Puffer); (ii) Die Lüfterdrehzahl kann begrenz werden, z.B. auf 75 %, um ein Risiko zu vermeiden und aus dem idealen Bereich herauszukommen → Wenn die generierten Vorhersagen jeweils zutreffen, kann die Grenze verringert werden; (iii) Stufe 4 läuft noch mit 100 % Lüfterdrehzahl → wenn Untertrocknung während des Anwelkens tatsächlich auftritt, ist eine Kompensation in Stufe 4 durch hohe Lüfterdrehzahl + steigende Temperaturen sehr wahrscheinlich: Zeitpuffer = 90 Minuten (d.h. 180 min → 270 max); (iv) Maximal zulässige Anwelkzeit ist z.B. 9h → Dann kann die z.B. ein Risikopuffer als Maximale Gesamtofenzeit = 21,5 h inklusive Beschickungszeit + 2h für Kühlung geregelt werden; (v) Berechnungen könnten z.B. auf 8,5h basieren, um die Ventilatorgeschwindigkeit zu erhöhen → zusätzlicher Puffer; (vi) Verfahren kann begonnen werden mit Malzchargen (oder anderen weniger sensiblen Chargen), die für Lebensmittelanwendungen produziert werden, bei denen die Spezifikationen weniger kritisch sind als bei Brauanwendungen. Ziel der Risikopuffer ist es, beim Verfahren automatisiert das Risiko der Untertrocknung gering zu halten.

### Referenzliste

1 Darre
2 Gekeimte Saaten, z.B. Grünmalz
   21 Trocknungsgutbett
   22 Getreide
3 Ventilator
   31 Drehzahlstellglied von 3
4 Luftmassenstrom
5 Weichen
6 Keimen
7 Umgebungsluft
8 Beladen
9 Schwelken
10 Durchbruch
11 Aufheizen
12 Abdarren
13 Abkühlen
14 Entladen
15 Intelligente Systemeinheit
   15.1 Optimierungsmittel
16 Datenübertragungsnetzwerk
17 Getreidefeuchtigkeitsgehaltssensor
18 Getreidemassensensor
19 Umgebungsluftfeuchtigkeitssensor
20 Sensoren für Wettermessdaten (20.1, 20.2)
21 Trocknungsgutfeuchtigkeitsgehaltsensor
22 Getreidelager
23 Weiche
24 Keimkasten
25 Malzsilo
26 Wetterstation
27 Darrmalz
n Drehzahl von 3 in %
Ht Trocknungsgutfeuchtigkeitsgehalt
Gt Grenzwert von Ht
Hg Getreidefeuchtigkeitsgehalt
Mg Getreidemasse
HI, Hla Umgebungsluftfeuchtigkeit, absolute Umgebungsluftfeuchtigkeit
W1, W2 Wettervorhersagedaten von HI (kann auch Hla umfassen)
Ev Energieverbrauchsvorhersage
t Darrzeit
tₘₐₓ Vorgegebene maximale Darrzeit

## Patentansprüche

1. Verfahren zum energieeffizienten Trocknen von gekeimten Saaten (2) in einer Darre (1) mit Hilfe eines drehzahlmodulierten Ventilators (3) zum Durchleiten eines Luftmassenstroms (4) durch ein Trocknungsgutbett (2.1) für die gekeimte Saat (2), wobei das Trocknen während einer vorgegebenen maximalen Darrzeit (tₘₐₓ) durchgeführt wird, **dadurch gekennzeichnet,**
**dass** ein Getreidefeuchtigkeitsgehalt (Hg) und eine Getreidemasse (Mg) eines Getreides (2.2) erfasst werden, welches nach einem Weichen (5) und einem Keimen (6) Basis für das Trocknungsgutbett (2.1) der gekeimten Saat (2) darstellt,
**dass** eine Umgebungsluftfeuchtigkeit (HI/Hla) einer für den Luftmassenstrom (4) verwendeten Umgebungsluft (7) erfasst wird,
**dass** eine Anzahl von Wettervorhersagedaten (W1, W2) zumindest hinsichtlich der Umgebungsluftfeuchtigkeit (HI/Hla) erfasst werden,
**dass** während des Trocknens ein Trocknungsgutfeuchtigkeitsgehalt (Ht) der gekeimte Saat (2) bis zu einem vorgegebenen Grenzwert (Gt) überwacht wird,
und **dass** basierend auf dem Getreidefeuchtigkeitsgehalt (Hg), der Getreidemasse (Mg), der Umgebungsluftfeuchtigkeit (HI/Hla), der Anzahl Wettervorhersagedaten (W1, W2) hinsichtlich der Umgebungsluftfeuchtigkeit (HI) und basierend auf dem Trocknungsgutfeuchtigkeitsgehalt (Ht) der gekeimten Saat (2) eine Drehzahlmodulation des Ventilators (3) derart vorgenommen wird, dass die vorgegebene maximale Darrzeit (tₘₐₓ) erreicht und/oder eingehalten wird.

2. Verfahren zum energieeffizienten Trocknen von gekeimten Saaten (2) nach Anspruch 1, **dadurch gekennzeichnet, dass** die gekeimte Saat (2) Grünmalz umfasst.

3. Verfahren zum energieeffizienten Trocknen von gekeimten Saaten (2) nach einem der Ansprüche 1 oder 2, **dadurch gekennzeichnet, dass** eine absolute Umgebungsluftfeuchtigkeit (Hla) der für den Luftmassenstrom (4) verwendeten Umgebungsluft (7) erfasst wird.

4. Verfahren zum energieeffizienten Trocknen von gekeimten Saaten (2) nach Anspruch 3, **dadurch gekennzeichnet, dass** die Anzahl von Wettervorhersagedaten (W1, W2) hinsichtlich der absoluten Umgebungsluftfeuchtigkeit (Hla) erfasst werden.

5. Verfahren zum energieeffizienten Trocknen von gekeimten Saaten (2) nach Anspruch 4, **dadurch gekennzeichnet, dass** die Anzahl von Wettervorhersagedaten (W1, W2) hinsichtlich der absoluten Umgebungsluftfeuchtigkeit (Hla) für eine ab einem Beladen (8) der Darre (1) und/oder ab Start des drehzahlmodulierten Ventilators (3) definierte Zeitdauer fortlaufend ermittelt werden.

6. Verfahren zum energieeffizienten Trocknen von gekeimten Saaten (2) nach Anspruch 5, **dadurch gekennzeichnet, dass** die definierte Zeitdauer einer Dauer einer angesetzten Trocknungszeit entspricht.

7. Verfahren zum energieeffizienten Trocknen von gekeimten Saaten (2) nach einem der Ansprüche 1 bis 6, **dadurch gekennzeichnet, dass** der Grenzwert (Gt) des Trocknungsgutfeuchtigkeitsgehalts (Ht) der gekeimten Saat (2) maximal 10% beträgt.

8. Verfahren zum energieeffizienten Trocknen von gekeimten Saaten (2) nach Anspruch 7, **dadurch gekennzeichnet, dass** der Grenzwert (Gt) des Trocknungsgutfeuchtigkeitsgehalts (Ht) der gekeimten Saat (2) maximal 5% oder zwischen 5% und 7% oder zwischen 5% und 10% beträgt.

9. Verfahren zum energieeffizienten Trocknen von gekeimten Saaten (2) nach einem der Ansprüche 1 bis 8, **dadurch gekennzeichnet, dass** die Erfassung des Getreidefeuchtigkeitsgehalts (Hg), der Getreidemasse (Mg), der Umgebungsluftfeuchtigkeit (HI), der Anzahl Wettervorhersagedaten (W1, W2) hinsichtlich der Umgebungsluftfeuchtigkeit (HI) und des Trocknungsgutfeuchtigkeitsgehalt (Ht) des Grünmalzes (2) in einer intelligenten Systemeinheit (15) erfolgt, mit der die Drehzahlmodulation des Ventilators (3) derart vorgenommen wird, dass die maximale Darrzeit (tₘₐₓ) erreicht und/oder eingehalten wird und eine Energieverbrauchsvorhersage (Ev) ermittelt wird.

10. Verfahren zum energieeffizienten Trocknen von gekeimten Saaten (2) nach Anspruch 9, **dadurch gekennzeichnet, dass** das Trocknen von gekeimten Saaten (2) in der Darre (1) mindestens Schwelken (9) und Abdarren (12) als zwei Trocknungsphasen umfasst, wobei für das Schwelken (9) des Grünmalzes (2) in der Darre (1) die Energieverbrauchsvorhersage (Ev) ermittelt wird.

11. Verfahren zum energieeffizienten Trocknen von gekeimten Saaten (2) nach Anspruch 10, **dadurch gekennzeichnet, dass** das Trocknen von gekeimten Saaten (2) in der Darre (1) zwischen dem Schwelken (9) und dem Abdarren (12) ein Aufheizen (11) umfasst, wobei für das Aufheizens (11) der gekeimten Saat (2) in der Darre (1) die Energieverbrauchsvorhersage (Ev) ermittelt wird.

12. Verfahren zum energieeffizienten Trocknen von gekeimten Saaten (2) nach einem der Ansprüche 9 bis 11, **dadurch gekennzeichnet, dass** für das Abdarren (12) der gekeimten Saat (2) in der Darre (1) die Energieverbrauchsvorhersage (Ev) ermittelt wird.

13. Vorrichtung zur Durchführung des Verfahrens nach einem der Ansprüche 1 bis 12, **dadurch gekennzeichnet, dass** das Trocknen von gekeimten Saaten (2) in der Darre (1) mindestens Beladen (8), Schwelken (9), Durchbruch (10), Aufheizen (11), Abdarren (12), Abkühlen (13) und Entladen (14) als Arbeitsschritte umfasst, wobei zum Trocknen der gekeimten Saat (2) der Ventilator (3) zum Durchleiten des Luftmassenstroms (4) durch das Trocknungsgutbett (2.1) der gekeimten Saat (2) über ein Datenübertragungsnetzwerk (16) bidirektional mit einer intelligenten Systemeinheit (15) verbunden ist, wobei die intelligente Systemeinheit (15) mit einem Getreidefeuchtigkeitsgehaltssensor (17), einem Getreidemassensensor (18), einem Umgebungsluftfeuchtigkeitssensor (19), einer Anzahl Sensoren für Wettervorhersagedaten (20.1, 20.2) und einem Trocknungsgutfeuchtigkeitsgehaltsensor (21) der gekeimten Saat (2) verbunden ist und die intelligente Systemeinheit (15) ferner ein Optimierungsmittel (15.1) zum dynamischen Optimieren und/oder Anpassen und/oder Lernen der Arbeitsschritte (8 - 14) zum energieeffizienten Trocknen von gekeimten Saaten (2) umfasst.

14. Vorrichtung nach Anspruch 13, **dadurch gekennzeichnet, dass** die Optimierungsmittel (15.1) der intelligenten Systemeinheit (15) über das Datenübertragungsnetzwerk (16) mit einem Drehzahlstellglied (3.1) des Ventilators (3) zwecks dynamischer Drehzahlmodulation des Ventilators (3) verbunden ist.

15. Vorrichtung zur Durchführung des Verfahrens nach einem der Ansprüche 1 bis 14, **dadurch gekennzeichnet, dass** der Trocknungsgutfeuchtigkeitsgehalt (Ht) des der gekeimten Saat (2) bis zu einem vorgegebenen Grenzwert (Gt) über einer inline Feuchtigkeitsbestimmung mittels einer Feuchtigkeitsvorrichtung und/oder eines Feuchtigkeitssensors überwacht wird.

16. Vorrichtung zur Durchführung des Verfahrens nach einem der Ansprüche 10 bis 15, **dadurch gekennzeichnet, dass** während des Schwelkens (9) die absolute Abluftfeuchtigkeit gemessen und/oder bestimmt wird.

17. Vorrichtung zur Durchführung des Verfahrens nach einem der Ansprüche 10 bis 16, **dadurch gekennzeichnet, dass** die absolute Abluftfeuchtigkeit während des Schwelkens (9) basierend auf gemessenen Wetterdaten mittels einem Vorhersagemodul bestimmt und/oder gemessen wird.

18. Vorrichtung zur Durchführung des Verfahrens nach einem der Ansprüche 1 bis 17, **dadurch gekennzeichnet, dass** die Abluftfeuchtigkeit zu Beginn des Darrens basierend auf gemessenen Wetterdaten mittels einem Vorhersagemodul bestimmt und/oder gemessen wird.

19. Vorrichtung zur Durchführung des Verfahrens nach einem der Ansprüche 17 und 18, **dadurch gekennzeichnet, dass** Vorhersagemodul als maschinen-lernende Einheit realisiert wird, welche als Inputparameter-Messwerte nach der Lernphase gemessene und/oder vorhergesagte Wetterdaten und/oder Umgebungsdaten umfasst.

## Claims

1. Process for energy-efficient drying of germinated seeds (2) in a drying kiln (1) by means of a rotational speed-modulated fan (3) for directing an air mass flow (4) through a bed of drying material (2.1) for the germinated seed (2), wherein the drying is implemented for a specified maximum kiln time (tₘₐₓ), **characterized in that**
a grain moisture content (Hg) and a grain mass (Mg) of a grain (2.2) are detected, which constitutes a basis for the bed of drying material (2.1) of the germinated seed (2) after steeping (5) and germinating (6),
an ambient air humidity (HI/Hla) is detected for an ambient air (7) used for the air mass flow (4),
a plurality of weather forecast data (W1, W2), at least with respect to the ambient air humidity (HI/Hla) are detected,
while drying, a drying material moisture content (Ht) of the germinated seed (2) is monitored up to a specified limit (Gt),
and based on the moisture content of the grain (Hg), that the grain mass (Mg), the ambient air humidity (HI/Hla), the plurality of weather forecasts (W1, W2), with respect to the ambient air humidity (HI) and based on the moisture content of the drying material (Ht) of the germinated seed (2), a rotational speed modulation of the fan (3) is undertaken in such a way that the specified maximum kiln time (tₘₐₓ) is reached and/or maintained.

2. Process for energy-efficient drying of germinated seeds (2) according to claim 1, **characterized in that** the germinated seed (2) comprises green malt.

3. Process for energy-efficient drying of germinated seeds (2) according to any one of claims 1 or 2, **characterized in that** an absolute ambient air humidity (Hla) of the ambient air (7) used for the air mass flow (4) is detected.

4. Process for energy-efficient drying of germinated seeds (2) according to claim 3, **characterized in that** the plurality of weather forecast data (W1, W2) with respect to the absolute ambient air humidity (Hla) are detected.

5. Process for energy-efficient drying of germinated seeds (2) according to claim 4, **characterized in that** the plurality of weather forecast data (W1, W2) with respect to the absolute ambient air humidity (Hla) for time duration defined from loading (8) of the kiln (1) and/or from the start of the rotational speed-modulated fan (3) are ascertained continuously.

6. Process for energy-efficient drying of germinated seeds (2) according to claim 5, **characterized in that** the defined time duration corresponds to a duration of a scheduled drying time.

7. Process for energy-efficient drying of germinated seeds (2) according to any one of claims 1 to 6, **characterized in that** the limit (Gt) of the moisture content of the drying material (Ht) of the germinated seed (2) is a maximum of 10%.

8. Process for energy-efficient drying of germinated seeds (2) according to claim 7, **characterized in that** the limit (Gt) of the moisture content of the drying material (Ht) of the germinated seed (2) is a maximum of 5% or between 5% and 7% or between 5% and 10%.

9. Process for energy-efficient drying of germinated seeds (2) according to any one of claims 1 to 8, **characterized in that** the detection of the moisture content of the grain (Hg), the grain mass (Mg), the ambient air humidity (HI), the plurality of weather forecast data (W1, W2) with respect to the ambient air humidity (HI) and the moisture content of the drying material (Ht) of the green malt (2) is done by means of an intelligent system unit (15), with which the rotational speed modulation of the fan 3 is done in such a way that the maximum kiln time (tₘₐₓ) is reached and/or is maintained, and an energy consumption forecast (Ev) is ascertained.

10. Process for energy-efficient drying of germinated seeds (2) according to claim 9, **characterized in that** drying of germinated seeds (2) in the kiln (1) comprises at least withering (9) and curing (12) as two drying phases, wherein for the withering (9) of the green malt (2) in the kiln (1), the energy consumption forecast (Ev) is ascertained.

11. Process for energy-efficient drying of germinated seeds (2) according to claim 10, **characterized in that** drying of germinated seeds (2) in the kiln (1) comprises heating up (11) between withering (9) and curing (12), wherein for the heating up (11) of the germinated seed (2) in the kiln (1), the energy consumption forecast (Ev) is ascertained.

12. Process for energy-efficient drying of germinated seeds (2) according to any one of claims 9 to 11, **characterized in that** the energy consumption forecast (Ev) is ascertained for the curing (12) of the germinated seed (2) in the kiln (1).

13. Device for implementing the process according to any one of claims 1 to 12, **characterized in that** the drying of the germinated seeds (2) in the kiln (1) comprises at least loading (8), withering (9), breakthrough (10), heating up (11), curing (12), cooling (13) and unloading (14) as working steps, wherein for drying the germinated seed (2) the fan (3) for directing the air mass flow (4) through the bed of drying material (2.1) of the germinated seed (2) is connected bidirectionally to an intelligent system unit (15) via a data transmission network (16), wherein the intelligent system unit (15) is connected to a grain moisture content sensor (17), a grain mass sensor (18), an ambient air humidity sensor (19), a plurality of sensors for weather forecast data (20.1, 20.2) and a drying material moisture content sensor (21) of the germinated seed (2) and the intelligent system unit (15) further comprises an optimization means (15.1) for dynamic optimization and/or adaptation and/or learning of the working steps (8 -14) for energy-efficient drying of germinated seeds (2).

14. Device according to claim 13, **characterized in that** the optimization means (15.1) of the intelligent system unit (15) is connected by the data transmission network (16) to a rotational speed actuator (3.1) of the fan (3) for the purpose of dynamic rotational speed modulation of the fan (3).

15. Device for the implementation of the process according to any one of claims 1 to 14, **characterized in that** the moisture content of the drying material (Ht) of the germinated seed (2) is monitored up to a specified limit (Gt) via an inline moisture determination by means of a moisture device and/or a moisture sensor.

16. Device for implementation of the process according to any one of claims 10 to 15, **characterized in that**, during withering (9) the absolute exhaust air humidity is measured and/or ascertained.

17. Device for implementation of the process according to any one of claims 10 to 16, **characterized in that** the absolute exhaust air humidity during withering (9) is determined and/or measured based on measured weather data by means of a forecast module.

18. Device for implementation of the process according to any one of claims 1 to 17, **characterized in that** the exhaust air humidity at the start of kilning is determined and/or measured based on measured weather data by means of a forecast module.

19. Device for implementation of the process according to any one of claims 17 and 18, **characterized in that** the forecast module is realized as a machine-learning unit, which comprises as input parameter measurements weather data and/or ambient data measured and/or forecast according to the learning phase.

## Revendications

1. Procédé de séchage économe en énergie de semences germées (2) dans une touraille (1) à l'aide d'un ventilateur (3) à vitesse modulée pour faire passer un flux massique d'air (4) à travers un lit de matière à sécher (2.1) pour les semences germées (2), le séchage étant effectué pendant une durée de touraillage maximale prédéfinie (tₘₐₓ), **caractérisé en ce que**
le taux d'humidité (Hg) et la masse (Mg) d'une céréale (2.2) sont enregistrés, cette céréale représentant, après un trempage (5) et une germination (6), la base du lit de séchage (2.1) de la semence germée (2),
une humidité ambiante (HI/Hla) d'un air ambiant (7) utilisé pour le flux massique d'air (4) est enregistrée,
un certain nombre de données de prévisions météorologiques (W1, W2) sont enregistrées, au moins en ce qui concerne l'humidité ambiante (HI/Hla),
pendant le séchage, le taux d'humidité de la matière à sécher (Ht) des semences germées (2) est surveillé jusqu'à ce qu'il atteigne une valeur limite prédéfinie (Gt),
et **en ce que**, sur la base du taux d'humidité des céréales (Hg), la masse des céréales (Mg), l'humidité ambiante (HI/Hla), le nombre de données de prévisions météorologiques (W1, W2) concernant l'humidité ambiante (HI) et sur la base du taux d'humidité de la matière à sécher (Ht) des semences germées (2), une modulation de la vitesse de rotation du ventilateur (3) est effectuée de telle sorte que le temps de touraillage maximal spécifié (tₘₐₓ) est atteint et/ou respecté.

2. Procédé de séchage économe en énergie de semences germées (2) selon la revendication 1, **caractérisé en ce que** les semences germées (2) comprennent du malt vert.

3. Procédé de séchage économe en énergie de semences germées (2) selon la revendication 1 ou 2, **caractérisée en ce qu'**une humidité ambiante absolue (Hla) d'un air ambiant (7) utilisé pour le flux massique d'air (4) est enregistrée.

4. Procédé de séchage économe en énergie de semences germées (2) selon la revendication 3, **caractérisé en ce que** le nombre de données de prévisions météorologiques (W1, W2) est enregistré en ce qui concerne l'humidité ambiante absolue (Hla).

5. Procédé de séchage économe en énergie de semences germées (2) selon la revendication 4, **caractérisé en ce que** le nombre de données de prévisions météorologiques (W1, W2) concernant l'humidité ambiante absolue (Hla) est déterminé en continu pour une durée définie à partir d'un chargement (8) de la touraille (1) et/ou à partir du démarrage du ventilateur à vitesse modulée (3).

6. Procédé de séchage économe en énergie de semences germées (2) selon la revendication 5, **caractérisé en ce que** la durée définie correspond à une durée de séchage déterminée.

7. Procédé de séchage économe en énergie de semences germées (2) selon l'une des revendications 1 à 6, **caractérisé en ce que** la valeur limite (Gt) du taux d'humidité de la matière à sécher (Ht) des semences germées (2) est de 10 % maximum.

8. Procédé de séchage économe en énergie de semences germées (2) selon la revendication 7, **caractérisé en ce que** la valeur limite (Gt) du taux d'humidité de la matière à sécher (Ht) de semences germées (2) est de 5 % maximum ou se situe entre 5 % et 7 % ou entre 5 % et 10 %.

9. Procédé de séchage économe en énergie de semences germées (2) selon l'une des revendications 1 à 8 **caractérisé en ce que** l'enregistrement du taux d'humidité des céréales (Hg), de la masse des céréales (Mg), de l'humidité ambiante (HI), du nombre de données de prévisions météorologiques (W1, W2) concernant l'humidité ambiante (HI) et du taux d'humidité de la matière à sécher (Ht) du malt vert (2) s'effectue dans une unité système intelligente (15) permettant de moduler la vitesse de rotation du ventilateur (3) de telle sorte que le temps de touraillage maximal (tₘₐₓ) soit atteint et/ou respecté et qu'une prévision de la consommation d'énergie (Ev) soit réalisée.

10. Procédé de séchage économe en énergie de semences germées (2) selon la revendication 9, **caractérisé en ce que** le séchage des semences germées (2) dans la touraille (1) comprend au moins deux phases de séchage, à savoir le fanage (9) et le touraillage (12), une prévision de consommation d'énergie (Ev) étant réalisée pour le fanage (9) du malt vert (2) dans la touraille (1).

11. Procédé de séchage économe en énergie de semences germées (2) selon la revendication 10, **caractérisé en ce que** le séchage de semences germées (2) dans la touraille (1) comprend un chauffage (11) entre le fanage (9) et le touraillage (12), une prévision de la consommation d'énergie (Ev) étant réalisée pour le chauffage (11) des semences germées (2) dans la touraille (1).

12. Procédé de séchage économe en énergie de semences germées (2) selon l'une des revendications 9 à 11, **caractérisé en ce que** la prévision de la consommation d'énergie (Ev) est réalisée pour le touraillage (12) des semences germées (2).

13. Dispositif pour la mise en œuvre du procédé selon l'une des revendications 1 à 12, **caractérisé en ce que** le séchage des semences germées (2) dans la touraille (1) comprend au moins les étapes de chargement (8), de fanage (9), de claquage (10), de chauffage (11), de touraillage (12), de refroidissement (13) et de déchargement (14), le ventilateur (3) étant relié à une unité système intelligente (15) via un réseau de transmission de données (16) de manière bidirectionnelle pour faire passer le flux massique d'air (4) à travers le lit de matière à sécher (2.1) des semences germées (2) afin de sécher les semences germées (2), l'unité système intelligente (15) étant reliée à un capteur de taux d'humidité des céréales (17), un capteur de masse des céréales (18), un capteur d'humidité ambiante (19), un certain nombre de capteurs pour les données de prévisions météorologiques (20.1, 20.2) et un capteur de taux d'humidité de la matière à sécher (21) des semences germées (2) et l'unité système intelligente (15) comprend en outre un moyen d'optimisation (15.1) pour optimiser et/ou adapter et/ou apprendre de manière dynamique les étapes de travail (8 à 14) pour le séchage économe en énergie des semences germées (2).

14. Dispositif selon la revendication 13, **caractérisé en ce que** les moyens d'optimisation (15.1) de l'unité système intelligente (15) sont reliés à un actionneur de vitesse (3.1) du ventilateur (3) via le réseau de transmission de données (16) afin de moduler dynamiquement la vitesse de rotation du ventilateur (3).

15. Dispositif pour la mise en œuvre du procédé selon l'une des revendications 1 à 14, **caractérisé en ce que** le taux d'humidité de la matière à sécher (Ht) des semences germées (2) est surveillé jusqu'à une valeur limite prédéterminée (Gt) au moyen d'un dispositif de mesure de l'humidité et/ou d'un capteur d'humidité, en ligne.

16. Dispositif pour la mise en œuvre du procédé selon l'une des revendications 10 à 15, **caractérisé en ce que** le taux d'humidité absolue de l'air d'échappement est mesuré et/ou déterminé pendant le fanage (9).

17. Dispositif pour la mise en œuvre du procédé selon l'une des revendications 10 à 16, **caractérisé en ce que** le taux d'humidité absolue de l'air d'échappement pendant le fanage (9) est déterminé et/ou mesuré à l'aide d'un module de prévision sur la base des données météorologiques mesurées.

18. Dispositif pour la mise en œuvre du procédé selon l'une des revendications 1 à 17, **caractérisé en ce que** le taux d'humidité de l'air depuis le début du touraillage est déterminé et/ou mesuré à l'aide d'un module de prévision sur la base de données météorologiques mesurées.

19. Dispositif pour la mise en œuvre du procédé selon l'une des revendications 17 et 18, **caractérisé en ce que** le module de prédiction est réalisé sous la forme d'une unité d'apprentissage automatique qui comprend des données météorologiques et/ou des données environnementales mesurées et/ou anticipées après la phase d'apprentissage en tant que valeurs de mesure de paramètres d'entrée.
